# EUROPEAN PATENT SPECIFICATION

(11) **EP 2 814 887 B1**
(45) Date of publication and mention of the grant of the patent: **25.12.2019**
(21) Application number: 12868879.3
(22) Date of filing: 26.03.2012
(51) Int. Cl.: B29C 48/00

(54) **FLAME-RETARDANT HALOGEN-FREE POLY(PHENYLENE ETHER) COMPOSITIONS**
FEUERFESTE HALOGENFREIE POLY(PHENYLENETHER)-ZUSAMMENSETZUNGEN
COMPOSITIONS DE POLY(PHÉNYLÈNE ÉTHER) IGNIFUGES SANS HALOGÈNE

(30) Priority: 17.02.2012 US 201261600300 P
(43) Date of publication of application: 24.12.2014
(73) Proprietor: SABIC Global Technologies B.V., 4612 PX Bergen op Zoom (NL)
(72) Inventor: SHAN, Wei, Shanghai 200063 (CN)
(74) Representative: Lang, Johannes
(86) International application number: PCT/CN2012/073028
(87) International publication number: WO 2013/120306

(56) References cited:
- EP-A1- 0 389 837
- EP-A1- 0 780 425
- JP-A- 2003 128 849
- US-A1- 2008 206 449
- US-A1- 2010 139 944
- US-A1- 2010 139 944
- US-A1- 2011 152 431
- US-A1- 2011 152 471
- US-B1- 6 172 441

## Description

### Background

Cable insulation and jacketing materials made from polyvinyl chloride (PVC) have long been the industry norm in the consumer electronics industry. However, recent changes in health and environmental policies, coupled with a sharper focus on sustainability, have forced a shift toward the use of non-PVC jacketing and insulation materials. The new materialsshould maintain the favorable appearance, texture, and performance qualities of PVC, but should also meet regional performance standards such as UL-62 in North America, HD21.14 in the European Community, and JCS 4509 in Japan. In particular, HD21.14 sets a stringent standard in the European Community for full cable smoke density. To pass, the jacketed cable has to achieve 60 percent of light transmittance, which is a measurement of smoke density. The higher the percent light transmittance, the better the performance.

As a result, there is a need to develop halogen-free cable insulation and jacketing materials that are flame retardant and that meet various regional performance standards.

### Summary

These and other needs are met by the present invention, which is directed to apolymer composition, comprising:
(a) 10 to 40 weight percent of a poly(phenylene ether)-polysiloxane copolymer; wherein the poly(phenylene ether)-polysiloxane copolymer is a mixture of a polyphenylene ether) homopolymer and a poly(phenylene ether)-polysiloxane block copolymer.
(b) 5 to 25 weight percent of a hydrogenated block copolymer of an alkenyl aromatic compound and a conjugated diene;
(c) 0 to 10 weight percent of a polybutene;
(d) 30 to 60 weight percent of a high purity magnesium hydroxide that has been surface-treated with an amino polysiloxane.
(e) 0 to 10 weight percent of an anti-UV agent;
(f) 1 to 40 weight percent of a copolymer of ethylene and a C₃-C₁₂ alpha-olefin; and
(g) 0 to 30 weight percent of a polyolefin homopolymer.

The invention is also directed to processes for making such polymer compositions, as well as articles derived therefrom. In particular, the invention is directed to an electrical cable or plug that is jacketed with the polymer composition of the present invention. These jacketed cables and plugs exhibit favorable color stability over time as well as good flame retardance and low smoke density when combusted.

### Detailed Description

All ranges disclosed herein are inclusive of the endpoints, and the endpoints can be independently combined with each other unless otherwise indicated. The use of the terms "a" and "an" and "the" and similar referents in the context of describing the invention (especially in the context of claims) are to be construed to cover both their singular and plural meanings, unless otherwise indicated herein or clearly contradicted by context. It should further be noted that the terms "first," "second," and the like herein do not denote any order, quantity, or importance, but rather are used to distinguish one element from another. The modifier "about" used in connection with a quantity is inclusive of the stated value and has the meaning dictated by the context (that is, it includes the degree of error associated with measurement of the particular quantity). As used herein weight percents are based on a 100 weight percent composition.

### Components

### Poly(phenylene ether)-Polysiloxane Copolymer

The composition of the present invention comprises a poly(phenylene ether)-polysiloxane copolymer. which is a mixture of a poly(phenylene ether) homopolmer and a poly(phenylene ether)-polysiloxane block copolymer.

### Poly(phenylene ether)-Polysiloxane Block Copolymer

The composition comprises a mixture of a poly(phenylene ether) homopolymer and a poly(phenylene ether) polysiloxane copolymer. The poly(phenylene ether)-polysiloxane copolymer is a block copolymer. The poly(phenylene ether) polysiloxane block copolymer comprises a poly(phenylene ether) block and a polysiloxane block such as described in US Patent No. 8,017,697. Flame- retardant compositions containing such poly(phenylene ether) -polysiloxane copolymers are disclosed in US-A-2010/0139944.

The block copolymer comprising a poly(phenylene ether) block and a polysiloxane block comprises, on average, 35 to 80 siloxane repeating units, 1 to 8 weight percent siloxane repeating units and 12 to 99 weight percent phenylene ether repeating units. The mixture is the product of a process comprising oxidatively copolymerizing a monomer mixture comprising a monohydric phenol and a hydroxyaryl-terminated polysiloxane. The block copolymer typically has a weight average molecular weight of at least 30,000 atomic mass units.

The poly(phenylene ether) homopolymer that is part of the mixture is the product of polymerizing a monohydric phenol alone and is a by-product of the block copolymer synthesis. When the monohydric phenol consists of a single compound (for example, 2,6-dimethylphenol, although other substituted monohydric phenols may also be used), the poly(phenylene ether) is the product of homopolymerizing that single monohydric phenol. When the monohydric phenol comprises two or more distinct monohydric phenol species (for example, a mixture of 2,6-dimethylphenol and 2,3,6-trimethylphenol), the poly(phenylene ether) is the product of copolymerizing the two or more distinct monohydric phenol species. Using nuclear magnetic resonance methods, it has not been possible to allocate the phenylene ether residues between poly(phenylene ether) and poly(phenylene ether)-polysiloxane block copolymer. However, the presence of poly(phenylene ether) is inferred from the presence of "tail" groups as defined below (e.g., 2,6-dimethylphenoxy groups when the monohydric phenol is 2,6-dimethylphenol) and/or the presence of "biphenyl" groups as defined below (e.g., the residue of 3,3',5,5'-tetramethyl-4,4'-biphenol) in the isolated product.

In addition to the poly(phenylene ether) homopolymer, the mixture comprises a poly(phenylene ether)-polysiloxane block copolymer. The poly(phenylene ether)-polysiloxane block copolymer comprises a poly(phenylene ether) block and a polysiloxane block. The poly(phenylene ether) block is a residue of the polymerization of the monohydric phenol. In some embodiments, the poly(phenylene ether) block comprises phenylene ether repeating units having the structure: 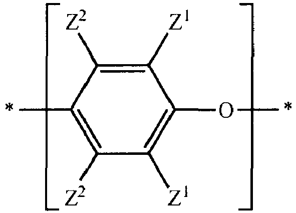 wherein for each repeating unit, each Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₁-C₁₂ halohydrocarbyloxy wherein at least two carbon atoms separate the halogen and oxygen atoms; and each Z₂ is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₁-C₁₂ halohydrocarbyloxy wherein at least two carbon atoms separate the halogen and oxygen atom.

In some embodiments, the poly(phenylene ether) block comprises 2,6-dimethyl-1,4-phenylene ether repeating units, that is, repeating units having the structure: 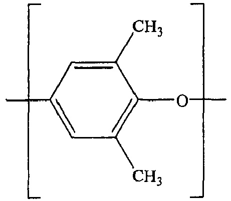 or 2,3,6-trimethyl-1,4-phenylene ether repeating units, or a combination thereof.

The polysiloxane block is a residue of the hydroxyaryl-terminated polysiloxane. In some embodiments, the polysiloxane block comprises repeating units having the structure: 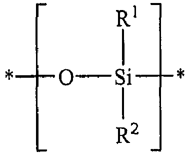 wherein each occurrence of R¹ and R² is independently hydrogen, C₁-C₁₂ hydrocarbyl or C₁-C₁₂ halohydrocarbyl; and the polysiloxane block further comprises a terminal unit having the structure: 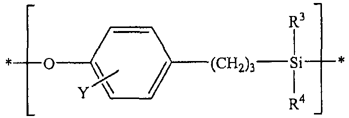 wherein Y is hydrogen, C₁-C₁₂ hydrocarbyl, C₁-C₁₂ hydrocarbyloxy, or halogen, and wherein each occurrence of R³ and R⁴ is independently hydrogen,C₁-C₁₂ hydrocarbyl or C₁-C₁₂ halohydrocarbyl. In some embodiments, R¹ and R² are C₁-C₆ alkyl, specifically C₁-C₃ alkyl, more specifically methyl. In some embodiments, the polysiloxane repeating units comprise dimethylsiloxane (-Si(CH₃)₂O-) units. In some embodiments, the polysiloxane block has the structure: 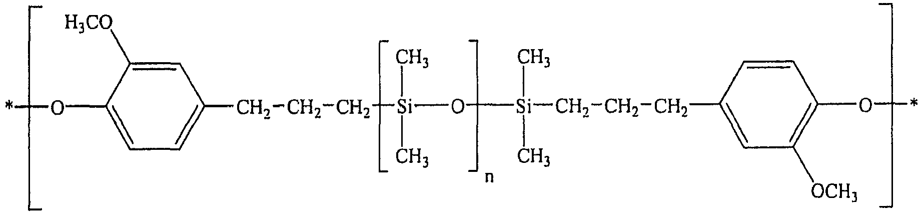 wherein n is 35 to 60.

The hydroxyaryl-terminated polysiloxane comprises at least one hydroxyaryl terminal group. In some embodiments, the hydroxyaryl-terminated polysiloxane has a single hydroxyaryl terminal group, in which case a poly(phenylene ether)-polysiloxane diblock copolymer is formed. In other embodiments, the hydroxyaryl-terminated polysiloxane has two hydroxyaryl terminal groups, in which case poly(phenylene ether)-polysiloxane diblock and/or triblock copolymers are formed. It is also possible for the hydroxyaryl-terminated polysiloxane to have a branched structure that allows three or more hydroxyaryl terminal groups and the formation of corresponding branched copolymers.

As noted above, the polysiloxane block comprises, on average, 35 to 80 siloxane repeating units. Within this range, the number of siloxane repeating units can be 35 to 60, more specifically 40 to 50. The number of siloxane repeating units in the polysiloxane block is essentially unaffected by the copolymerization and isolation conditions, and it is therefore equivalent to the number of siloxane repeating units in the hydroxyaryl-terminated polysiloxane starting material. When not otherwise known, the average number of siloxane repeating units per hydroxylaryl-terminate polysiloxane molecule can be determined by NMR methods that compare the intensity of signals associated with the siloxane repeating units to those associated with the hydroxyaryl terminal groups. For example, when the hydroxyaryl-terminated polysiloxane is a eugenol-capped polydimethylsiloxane, it is possible to determine the average number of siloxane repeating units by a proton nuclear magnetic resonance (¹H NMR) method in which integrals for the protons of the dimethylsiloxane resonance and the protons of the eugenol methoxy group are compared.

The mixture of a poly(phenylene ether) homopolymer and a poly(phenylene ether) polysiloxane block copolymer comprises 1 to 8 weight percent siloxane repeating units and 12 to 99 weight percent phenylene ether repeating units, based on the total weight of the thermoplastic composition. Within these ranges, the weight percent of siloxane repeating units can be 2 to 7 weight percent, specifically 3 to 6 weight percent, more specifically 4 to 5 weight percent; and the weight percent phenylene ether repeating units can be 50 to 98 weight percent, specifically 70 to 97 weight percent, more specifically 90 to 96 weight percent.

As mentioned above, the mixture of a poly(phenylene ether) homopolymer and a poly(phenylene ether) polysiloxane block copolymer is the product of a process comprising oxidatively copolymerizing a monomer mixture comprising a monohydric phenol and a hydroxyaryl-terminated polysiloxane. As such, the process is simpler than poly(phenylene ether)-polysiloxane block copolymer synthesis methods that require the coupling of pre-formed poly(phenylene ether) and polysiloxane blocks.

The mixture as described herein comprising the poly(phenylene ether) homopolymer and a poly(phenylene ether) polysiloxane block copolymer has a weight average molecular weight of at least 30,000 atomic mass units. In some embodiments the weight average molecular weight is 30,000 to 150,000 atomic mass units, specifically 35,000 to 120,000 atomic mass units, more specifically 40,000 to 90,000 atomic mass units, even more specifically 45,000 to 70,000 atomic mass units. In some embodiments, the number average molecular weight is 10,000 to 50,000 atomic mass units, specifically 10,000 to 30,000 atomic mass units, more specifically 14,000 to 24,000 atomic mass units. Chromatographic methods are available for determining molecular weight.

The mixture can also include relatively small amounts of very low molecular weight species. Thus, in some embodiments, the mixture comprises less than 25 weight percent of molecules having a molecular weight less than 10,000 atomic mass units, specifically 5 to 25 weight percent of molecules having a molecular weight less than 10,000 atomic mass units, more specifically 7 to 21 weight percent of molecules having a molecular weight less than 10,000 atomic mass units. In some embodiments, the molecules having a molecular weight less than 10,000 atomic mass units comprise, on average, 5 to 10 weight percent siloxane repeating units, specifically 6 to 9 weight percent siloxane repeating units.

Similarly, the mixture can also include relatively small amounts of very high molecular weight species. Thus, in some embodiments, mixture comprises less than 25 weight percent of molecules having a molecular weight greater than 100,000 atomic mass units, specifically 5 to 25 weight percent of molecules having a molecular weight greater than 100,000 atomic mass units, more specifically 7 to 23 weight percent of molecules having a molecular weight greater than 100,000 atomic mass units. In some embodiments, the molecules having a molecular weight greater than 100,000 atomic mass units comprise, on average, 3 to 6 weight percent siloxane repeating units, specifically 4 to 5 weight percent siloxane repeating units.

In some embodiments, the mixture of a poly(phenylene ether) homopolymer and a poly(phenylene ether) polysiloxane block copolymer has an intrinsic viscosity of at least 0.3 deciliter per gram, as measured at 25 °C. in chloroform. The intrinsic viscosity can be 0.3 to 0.6 deciliter per gram, specifically 0.3 to 0.5 deciliter per gram, still more specifically 0.31 to 0.55 deciliter per gram, yet more specifically 0.35 to 0.47 deciliter per gram, and yet more specifically .385 to .425deciliter per gram..

One indication of the efficiency with which the hydroxyaryl-terminated polysiloxane is incorporated into block copolymer is the low concentration of so-called poly(phenylene ether) "tail" groups. In a homopolymerization of 2,6-dimethylphenol, a large fraction of product molecules have a so-called head-to-tail structure in which the linear product molecule is terminated on one end by a 3,5-dimethyl-4-hydroxyphenyl "head" and on the other end by a 2,6-dimethylphenoxy "tail". Thus, when the monohydric phenol consists of 2,6-dimethylphenol, the poly(phenylene ether) tail group has the structure: 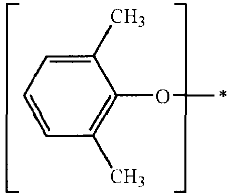 wherein the 3-, 4-, and 5-positions of the ring are substituted with hydrogen atoms. (that is, the term 2,6-dimethylphenoxy does not encompass divalent 2,6-dimethyl-1,4-phenylene ether groups). In a copolymerization of monohydric phenol with hydroxyaryl-terminated polysiloxane, incorporation of the hydroxyaryl-terminated polysiloxane into block copolymer will reduce the concentration of phenylene ether "tail" groups. Thus, in some embodiments, the monohydric phenol consists of 2,6-dimethylphenol, and the thermoplastic composition of comprises less than or equal to 0.4 weight percent, specifically 0.2 to 0.4 weight percent, of 2,6-dimethylphenoxy groups, based on the weight of the thermoplastic composition.

The mixture containing the poly(phenylene ether)-polysiloxane block copolymer can further include groups derived from a diphenoquinone, which is itself an oxidation product of the monohydric phenol. For example, when the monohydric phenol is 2,6-dimethylphenol, the poly(phenylene ether)-polysiloxane can comprise 1.1 to 2.0 weight percent of 2,6-dimethyl-4-(3,5-dimethyl-4-hydroxyphenyl)phenoxy groups.

The mixture can be isolated from solution by an isolation procedure that minimizes volatile and nonvolatile contaminants. For example, in some embodiments, the poly(phenylene ether)-polysiloxane copolymer comprises less than or equal to 1 weight percent of total volatiles, specifically 0.2 to 1 weight percent of total volatiles, determined according to the procedure in the working examples below. In some embodiments, the monomer mixture is oxidatively copolymerized in the presence of a catalyst comprising a metal (such as copper or manganese), and the poly(phenylene ether)-polysiloxane copolymer comprises less than or equal to 100 parts per million by weight of the metal, specifically 5 to 100 parts per million by weight of the metal, more specifically 10 to 50 parts per million by weight of the metal, even more specifically 20 to 50 parts by weight of the metal.

The mixture containing the poly(phenylene ether)-polysiloxane can be prepared by a method comprising oxidatively copolymerizing a monohydric phenol and a hydroxyaryl-terminated polysiloxane to form a poly(phenylene ether)-polysiloxane; wherein the oxidative copolymerization is conducted with a reaction time greater than or equal to 80 minutes; wherein the hydroxyaryl-terminated polysiloxane comprises, on average, 35 to 80 siloxane repeating units and the hydroxyaryl-terminated polysiloxane constitutes 1 to 8 weight percent of the combined weight of the monohydric phenol and the hydroxyaryl-terminated polysiloxane.

In other embodiments, the hydroxyaryl-terminated polysiloxane comprises, on average, 35 to 80 siloxane repeating units; and wherein the hydroxyaryl-terminated polysiloxane constitutes more than 20 and up to 80 weight percent of the combined weight of the monohydric phenol and the hydroxyaryl-terminated polysiloxane.

In some embodiments, the hydroxyaryl-terminated polysiloxane comprises, on average, 40 to 70 siloxane repeating units, specifically 40 to 60 siloxane repeating units, more specifically 40 to 50 siloxane repeating units.

As noted above, in one embodiment, the hydroxyaryl-terminated polysiloxane constitutes 1 to 8 weight percent, 9 to 20 percent, and more than 20 and up to 80 percent of the combined weight of the monohydric phenol and the hydroxyaryl-terminated polysiloxane. Within this range, the hydroxyaryl-terminated polysiloxane can constitute 2 to 7 weight percent, specifically 3 to 6 weight percent, more specifically 4 to 6 weight percent of the combined weight of the monohydric phenol and the hydroxyaryl-terminated polysiloxane.

In some embodiments, the oxidative copolymerization is initiated in the presence of at least 80 weight percent of the hydroxyaryl-terminated polysiloxane, specifically at least 90 weight percent of the hydroxyaryl-terminated polysiloxane, more specifically 100 weight percent of the hydroxyaryl-terminated polysiloxane.

In some embodiments, the oxidative copolymerization is initiated in the presence of 0 to 50 weight percent of the monohydric phenol, specifically 1 to 30 weight percent of the monohydric phenol, more specifically 2 to 20 weight percent of the monohydric phenol, even more specifically 5 to 10 weight percent of the monohydric phenol.

The oxidative copolymerization is conducted with a reaction time greater than or equal between about 80 and 100 minutes. The reaction time is the elapsed time between initiation and termination of oxygen flow. For brevity, the description herein repeatedly refers to "oxygen" or "oxygen flow", it will be understood that any oxygen containing gas, including air, can be used as the oxygen source.) In some embodiments, the reaction time is 110 to 300 minutes, specifically 140 to 250 minutes, more specifically 170 to 220 minutes.

The oxidative copolymerization can include a "build time" which is the time between completion of monomer addition and termination of oxygen flow. In some embodiments, the reaction time comprises a build time of 80 to 160 minutes. In some embodiments, the reaction temperature during at least part of the build time can be 40 to 60 °C, specifically 45 to 55 °C.

After termination of the copolymerization reaction, the mixture can be isolated from solution using methods known in the art for isolating poly(phenylene ether)s from solution. For example, the poly(phenylene ether)-polysiloxane copolymer can be isolated by precipitation with an antisolvent, such as a C₁-C₆ alkanol, including methanol, ethanol, n-propanol, and isopropanol. The present inventors have observed that the use of isopropanol is advantageous because it is a good solvent for unreacted hydroxyaryl-terminated polysiloxane. Therefore, precipitation and washing with isopropanol substantially removes hydroxyaryl-terminated polysiloxane from the isolated product. As an alternative to precipitation, the poly(phenylene ether)-polysiloxane copolymer can be isolated by direct isolation methods, including devolatilizing extrusion.

In some embodiments, the poly(phenylene ether)-polysiloxane comprises 1 to 8 weight percent siloxane repeating units.

In some embodiments, the poly(phenylene ether)-polysiloxane copolymer has a weight average molecular weight of at least 30,000 atomic mass units, specifically 30,000 to 150,000 atomic mass units, more specifically 35,000 to 120,000 atomic mass units, even more specifically 40,000 to 90,000 atomic mass units, yet more specifically 45,000 to 70,000 atomic mass units.

In a very specific embodiment, the poly(phenylene ether)-polysiloxane copolymer has an intrinsic viscosity of about 0.385-0.425 dL/g and a weight percent of incorporated siloxane of at least about 4-6 percent. In another embodiment, the poly(phenylene ether)-polysiloxane copolymer has an intrinsic viscosity of about 0.41 dL/g. In another very specific embodiment, the poly(phenylene ether)-polysiloxane copolymer is described as Example 16 in US 8017,697. Thus, in one embodiment, the poly(phenylene ether)-polysiloxane copolymer has an intrinsic viscosity of about 0.39 dL/g and a weight percent of incorporated siloxane of at least about 4.78 percent.

In some embodiments, the composition of the present invention contains about 5 to about 55 weight percent, and more specifically about 10 to about 40 weight percent of the poly(phenylene ether)-polysiloxane copolymer. More specifically, the composition of the present invention contains about 10 to about 25 weight percent and more specifically about 15 to about 25 weight percent of the poly(phenylene ether)-polysiloxane copolymer.

### Hydrogenated Block Copolymer

In addition to the poly(phenylene ether)-polysiloxane copolymer, the composition further comprises one or more hydrogenated block copolymers of an alkenyl aromatic compound and a conjugated diene. For conciseness, this component is referred to herein as the "hydrogenated block copolymer."

The hydrogenated block copolymer may comprise about 10 to about 90 weight percent of poly(alkenyl aromatic) content and about 90 to about 10 weight percent of poly(conjugated diene) content. In some embodiments, the poly(alkenyl aromatic) content is about 10 to 45 weight percent, specifically about 20 to about 40 weight percent. In other embodiments, the poly(alkenyl aromatic) content is greater than 45 weight percent to about 90 weight percent, specifically about 55 to about 80 weight percent. The hydrogenated block copolymer can have a weight average molecular weight of about 40,000 to about 400,000 atomic mass units. As for the poly(phenylene ether) component, the number average molecular weight and the weight average molecular weight may be determined by gel permeation chromatography and based on comparison to polystyrene standards. In some embodiments, the hydrogenated block copolymer has a weight average molecular weight of 200,000 to about 400,000 atomic mass units, specifically 220,000 to about 350,000 atomic mass units. In other embodiments, the hydrogenated block copolymer can have a weight average molecular weight of about 40,000 to less than 200,000 atomic mass units, specifically about 40,000 to about 180,000 atomic mass units, more specifically about 40,000 to about 150,000 atomic mass units.

The alkenyl aromatic monomer used to prepare the hydrogenatedblock copolymer can have the structure: 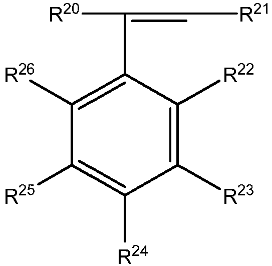 wherein R²⁰ and R²¹ each independently represent a hydrogen atom, a C₁ -C₈-alkyl group, or a C₂ -C₈-alkenyl group; R²² and R²⁶ each independently represent a hydrogen atom, a C₁-C₈-alkyl group, a chlorine atom, or a bromine atom; and R²³, R²⁴, and R²⁵ each independently represent a hydrogen atom, a C₁ -C₈-alkyl group, or a C₂ -C₈-alkenyl group, or R²³ and R²⁴ are taken together with the central aromatic ring to form a naphthyl group, or R²⁴ and R²⁵ are taken together with the carbons to which they are attached to form a naphthyl group. Specific alkenyl aromatic monomers include, for example, styrene, chlorostyrenes such as p-chlorostyrene, and methylstyrenes such as alpha-methylstyrene and p-methylstyrene. In some embodiments, the alkenyl aromatic monomer is styrene.

The conjugated diene used to prepare the hydrogenated block copolymer can be a C₄-C₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In some embodiments, the conjugated diene is 1,3-butadiene, 2-methyl-1,3-butadiene, or a combination thereof. In some embodiments, the conjugated diene consists of 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some embodiments, the aliphatic unsaturation in the (B) block is reduced by at least 50 percent, specifically at least 70 percent. The arrangement of blocks (A) and (B) includes a linear structure, a grafted structure, and a radial teleblock structure with or without a branched chain. Linear block copolymers include tapered linear structures and non-tapered linear structures. In some embodiments, the hydrogenated block copolymer has a tapered linear structure. In some embodiments, the hydrogenated block copolymer has a non-tapered linear structure. In some embodiments, the hydrogenated block copolymer comprises a B block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of A and B, wherein the molecular weight of each A block may be the same as or different from that of other A blocks, and the molecular weight of each B block may be the same as or different from that of other B blocks. In some embodiments, the hydrogenated block copolymer is a diblock copolymer, a triblock copolymer, or a combination thereof.

In some embodiments, the hydrogenated block copolymer is a polystyrene-poly(ethylene-butylene)-polystyrene triblock copolymer. In some embodiments, the block copolymer is a polystyrene-poly(ethylene-propylene) diblock copolymer. These hydrogenatedblock copolymers do not include the residue of any functionalizing agents or any monomers other than those indicated by their names.

In some embodiments, the hydrogenated block copolymer excludes the residue of monomers other than the alkenyl aromatic compound and the conjugated diene. In some embodiments, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms.

In some embodiments, the block copolymer includes the residue of one or more acid functionalizing agents, such as maleic anhydride.

Methods for preparing hydrogenated block copolymers are known in the art and many hydrogenated block copolymers are commercially available. Illustrative commercially available block copolymers include the polystyrene-poly(ethylene-propylene) diblock copolymers available from Kraton Performance Polymers, Inc. as Kraton G1701 and G1702; the polystyrene-poly(ethylene-butylene)-polystyrene triblock copolymers available from Kraton Performance Polymers, Inc. as Kraton G1641, G1650, G1651, G1654, G1657, G1726, G4609, G4610, GRP-6598, RP6924, A1636, MD6932M, MD6933, and MD6939; the polystyrene-poly(ethylenebutylene-styrene)-polystyrene (S-EB/S-S) triblock copolymers available from Kraton Polymers as Kraton A1535 and A1536; the polystyrene-poly(ethylene-propylene)-polystyrene triblock copolymers available from Kraton Performance Polymers, Inc. as Kraton G1730, A1635HU and A1636HU; the maleic anhydride-grafted polystyrene-poly(ethylene-butylene)-polystyrene triblock copolymers available from Kraton Performance Polymers, Inc. as Kraton FG1901, FG1924, and MD-6684; the maleic anhydride-grafted polystyrene-poly(ethylene-butylene-styrene)-polystyrene triblock copolymer available from Kraton Performance Polymers, Inc. as Kraton MD6670; the polystyrene-poly(ethylene-butylene)-polystyrene triblock copolymer comprising 67 weight percent polystyrene available from AK Elastomer as TUFTEC H1043; the polystyrene-poly(ethylene-butylene)-polystyrene triblock copolymer comprising 42 weight percent polystyrene available from AK Elastomer as TUFTEC H1051; the polystyrene-poly(butadiene-butylene)-polystyrene triblock copolymers available from AK Elastomer as TUFTEC P1000 and P2000; the polystyrene-polybutadiene-poly(styrene-butadiene)-polybutadiene block copolymer available from AK Elastomer as S.O.E.-SS L601; the radial block copolymers available from Chevron Phillips Chemical Company as K-Resin KK38, KR01, KR03, and KR05; the polystyrene-poly(ethylene-butylene)-polystyrene triblock copolymer comprising about 60 weight polystyrene available from Kuraray as SEPTON S8104; the polystyrene-poly(ethylene-ethylene/propylene)-polystyrene triblock copolymers available from Kuraray as SEPTON S4044, S4055, S4077, and S4099; and the polystyrene-poly(ethylene-propylene)-polystyrene triblock copolymer comprising about 65 weight percent polystyrene available from Kuraray as SEPTON S2104. Mixtures of two of more block copolymers may be used.

In some embodiments, at least a portion of the hydrogenated block copolymer is provided in the form of a melt-kneaded blend comprising hydrogenated block copolymer, an ethylene-propylene copolymer, and mineral oil, such as, for instance TPE-SB2400, from Sumitomo. In this context, the term "melt-kneaded blend" means that the hydrogenated block copolymer, the ethylene-propylene copolymer, and the mineral oil are melt-kneaded with each other before being melt-kneaded with other components. The ethylene-propylene copolymer in this melt-kneaded blend is an elastomeric copolymer (that is, a so-called ethylene-propylene rubber (EPR)). Suitable ethylene-propylene copolymers are described below in the context of the optional ethylene/alpha-olefin copolymer. In these blends, the hydrogenated block copolymer amount may be about 20 to about 60 weight percent, specifically about 30 to about 50 weight percent; the ethylene-propylene copolymer amount may be about 2 to about 20 weight percent, specifically about 5 to about 15 weight percent; and the mineral oil amount may be about 30 to about 70 weight percent, specifically about 40 to about 60 weight percent; wherein all weight percents are based on the total weight of the melt-kneaded blend.

In some embodiments, the composition comprises about 1 to about 65 weight percent and more specifically about 5 to about 25 weight percent of the hydrogenated block copolymer. More specifically, the composition comprises about 10 to about 15 weight percent of the hydrogenated block copolymer. Within this range, the hydrogenated block copolymer amount specifically may be about 11 to about 20 weight percent based on the total weight of the composition.

In some embodiments, the composition comprises a linear triblock polystyrene-poly(ethylene-butylene)-polystyrene copolymer such as G1650 from Kraton Performance Polymers in about 5 to 30 weight percent based on the total weight of the composition. In another embodiment, the composition comprises G1650 from Kraton Performance Polymers in about 5 to 15 weight percent based on the total weight of the composition.

### Flame Retardant

The composition of the present invention comprises one or more flame retardants, which are a high purity magnesium hydroxide that has been surface treated with an amino polysiloxane. In some embodiments, the magnesium hydroxide was obtained from Albemarle as Magnifin H-5IV

Typically, 30 weight percent to 60 weight percent of the flame retardant is present. More typically 32 to 58 weight percent of the flame retardant are present. More typically, 35 to 55 weight percent of the flame retardant is present. More typically 35 to 48 weight percent of the flame retardant is present.

### Other Flame Retardants

In other embodiments, the invention may optionally comprise one or more additional flame retardants selected from the group consisting of other metal hydroxides, phosphoric acid salts, organic phosphates, and phosphinates and phosphonates, all of which are described below.

### Metal Hydroxides

Suitable metal hydroxides include all those capable of providing fire retardance, as well as combinations thereof. The metal hydroxide can be chosen to have substantially no decomposition during processing of the fire additive composition and/or flame retardant thermoplastic composition. Substantially no decomposition is defined herein as amounts of decomposition that do not prevent the flame retardant additive composition from providing the desired level of fire retardance. Exemplary metal hydroxides include, but are not limited to), aluminum hydroxide (for example, CAS No. 21645-51-2), cobalt hydroxide (for example. CAS No. 21041-93-0) and combinations of two or more of the foregoing. In some embodiments, the metal hydroxide comprises magnesium hydroxide. In some embodiments the metal hydroxide has an average particle size less than or equal to 10 micrometers and/or a purity greater than or equal to 90 weight percent. In some embodiments it is desirable for the metal hydroxide to contain substantially no water, i.e. a weight loss of less than 1 weight percent upon drying at 120° C. for 1 hour. In some embodiments the metal hydroxide can be coated, for example, with stearic acid or other fatty acids. In other embodiments, the metal hydroxide is coated with an aminosilane.

### Phosphoric Acid Salts

In some embodiments, the flame retardant comprises one or more phosphoric acid salts.

As mentioned above, the phosphoric acid salt can be selected from the group consisting of melamine phosphate (for example, CAS No. 20208-95-1), melamine pyrophosphate (for example, CAS No. 15541-60-3), melamine polyphosphate, melamine polyphosphate, melamine orthophosphate (for example, CAS No. 20208-95-1), monoammonium phosphate (for example, CAS No. 7722-76-1), diammonium phosphate (for example, CAS No. 7783-28-0), phosphoric acid amide (for example, CAS No. 680-31-9), melamine polyphosphate (for example, CAS No. 218768-84-4 or 56386-64-2), ammonium polyphosphate (for example, CAS No. 68333-79-9), polyphosphoric acid amide and combinations of two or more of the foregoing phosphoric acid salts. The phosphoric acid salt can be surface coated with one or more of compounds selected from melamine monomer, melamine resin, modified melamine resin, guanamine resin, epoxy resin, phenol resin, urethane resin, urea resin, silicone resin, and the like. The identity of the surface coating, when present, is typically chosen based upon the identity of the thermoplastic components of the flame retardant thermoplastic composition. In some embodiments the phosphoric acid salt comprises melamine polyphosphate. In some embodiments the phosphoric acid salt comprises a combination of melamine polyphosphate and melamine phosphate.

Phosphoric acid salts are commercially available or can be synthesized by the reaction of a phosphoric acid with the corresponding amine containing compound as is taught in the art.

### Organic Phosphates

In some embodiments, the flame retardant comprises one or more organic phosphate.

The organic phosphate can be an aromatic phosphate compound of the formula: 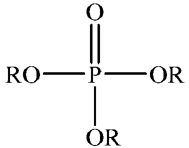 where each R is independently an alkyl, cycloalkyl, aryl, alkyl substituted aryl, halogen substituted aryl, aryl substituted alkyl, halogen, or a combination of any of the foregoing, provided at least one R is aryl or alkyl substituted aryl.

Examples include phenyl bisdodecyl phosphate, phenylbisneopentyl phosphate, phenyl-bis(3,5,5'-tri-methyl-hexyl phosphate), ethyldiphenyl phosphate, 2-ethyl-hexyldi(p-tolyl)phosphate, bis-(2-ethylhexyl)p-tolylphosphate, tritolyl phosphate, bis-(2-ethylhexyl)phenyl phosphate, tri-(nonylphenyl)phosphate, di (dodecyl)p-tolyl phosphate, tricresyl phosphate, triphenyl phosphate, dibutylphenyl phosphate, 2-chloroethyldiphenyl phosphate, p-tolyl bis(2,5,5'-trimethylhexyl)phosphate, 2-ethylhexyldiphenyl phosphate, and the like. In some embodiments the phosphate is one in which each R is aryl and/or alkyl substituted aryl, such as triphenyl phosphate and tris(alkyl phenyl)phosphate.

Alternatively, the organic phosphate can be a di- or polyfunctional compound or polymer having one of the following formulas: 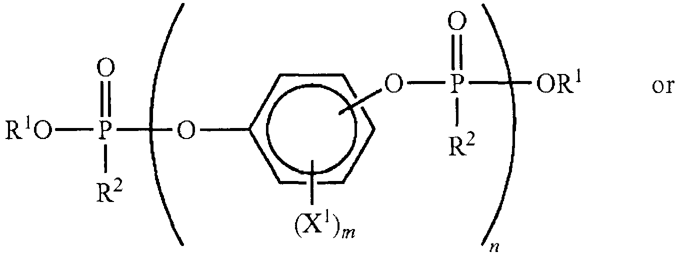 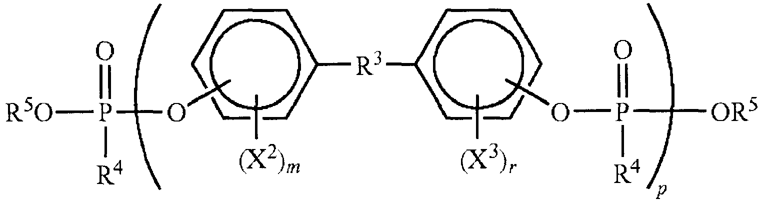 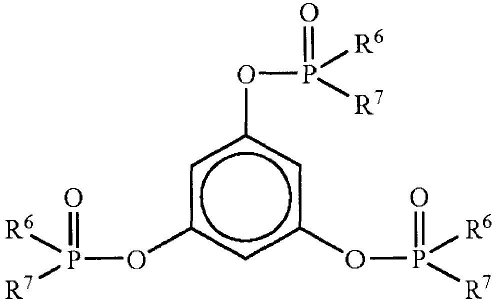 including mixtures thereof, in which R¹, R³ and R⁵ are, independently, hydrocarbon; R², R⁴, R⁶ and R⁷ are, independently, hydrocarbon or hydrocarbonoxy; X¹, X² and X³ are, independently, halogen; m and r are 0 or integers from 1 to 4, and n and p are from 1 to 30.

Examples include the bis diphenyl phosphates of resorcinol, hydroquinone and bisphenol-A, respectively, or their polymeric counterparts. Methods for the preparation of the aforementioned di- and polyfunctional aromatic phosphates are described in British Patent No. 2,043,083.

Exemplary organic phosphates include, but are not limited to, phosphates containing substituted phenyl groups, phosphates based upon resorcinol such as, for example, resorcinol bis-diphenylphosphate, as well as those based upon bis-phenols such as, for example, bis-phenol A bis-diphenylphosphate. In some embodiments, the organic phosphate is selected from tris(butyl phenyl)phosphate (for example, CAS No. 89492-23-9, and 78-33-1), resorcinol bis-diphenylphosphate (RDP, CAS No. 57583-54-7), bis-phenol A bis-diphenylphosphate (BDADP, CAS No. 181028-79-5), triphenyl phosphate (for example, CAS No. 115-86-6), tris(isopropyl phenyl)phosphate (for example, CAS No. CAS No. 68937-41-7) and mixtures of two or more of the foregoing.

### Phosphinate and Phosphonate Salts

In some embodiments, the flame retardant comprises one or more metal salts of phosphinates and phosphonates (so-called "metallophophorous" flame retardants). The metal component of the metal phosphinate or phosphonate salt can be a cation of Mg, Ca, Al, Sb, Sn, Ge, Ti, Zn, Fe, Zr, Ce, Bi, Sr, Mn, Li, Na, or K. The phosphinate or phosphonate component can be dimethylphosphinate, diethylphosphinate, di-n-propylphosphinate, di-n-butylphosphinate, din-hexylphosphinate, dicyclohexylphosphinate, di-2-ethylhexylphosphinate, diphenylphosphinate, di-o-tolylphosphinate, dimethylphosphonate, diethylphosphonate, di-n-propylphosphonate, di-n-butylphosphonate, di-n-hexylphosphonate, dicyclohexylphosphonate, di-2-ethylhexylphoshate, diphenylphosphonate, di-o-tolylphosphonate, dimethylphosphate, diethylphosphate, di-n-propylphosphate, di-n-butylphosphate, di-n-hexylphosphate, dicyclohexylphosphate, di-2-ethylhexylphoshate, diphenylphosphate, di-o-tolylphosphate, and the like, and mixtures thereof. A preferred metallophosphorus flame retardant is aluminum tris (diethylphosphinate). Preparation of metallophosphorus flame retardants is described, for example, in U.S. Pat. Nos. 6,255,371 and 6,547,992 to Schlosser et al., and 6,355,832 and 6,534,673 to Weferling et al.

Some of the above described components of the flame retardant additive composition are in liquid form at room temperature (25° C) and some are solid.

### Anti-Ultraviolet Radiation Agent

In addition to the poly(phenylene ether)-polysiloxane copolymer, hydrogenated block copolymer, polybutene, and magnesium hydroxide, the composition may further comprise an agent that protects the composition from UV degradation, referred to herein as an "anti-UV agent." Anti-UV agents are used in the composition of the invention when the end product is a light-colored article such as the jacketing material for a cable. When a dark colored article is desired, it is not necessary to use an anti-UV agent.

Anti-UV agents include UV absorbers such as particular compounds with a benzotriazole core (i.e., 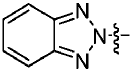 ), such as those shown below.

| Structure | Name |
|---|---|
| 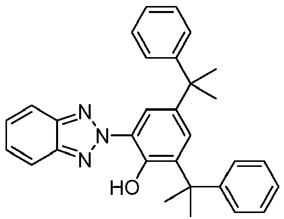 | 2-(2H-benzotriazol-2-yl)-4,6-bis(1-methyl-1-phenylethyl)phenol |
| | CAS Reg. No. 70321-86-7 |
| | Tinuvin 234 |
| 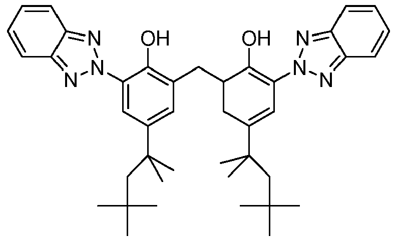 | 2,2'-Methylene bis(6-(2H-benzotriazol-2-yl)-4-,1,1,3,3,tetramethylbutyl)phenol) |
| | CAS Reg. No. 103597-45-1 |
| | Chiguard 5431 |

In one embodiment, the anti-UV agent used in the compositions of the present invention is a benzotriazole-type anti-UV such as Tinuvin 234.

In one embodiment, the anti-UV agent used in the composition of the present invention comprises a trisaryl-1,3,5-triazine UV absorber, which are compounds that have a triazine core ( 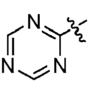 ), as in the following compounds.

| Structure | Name |
|---|---|
| 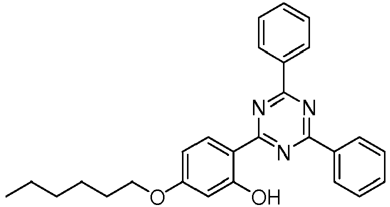 | 2-(4,6-Diphenyl-1,3,5-triazin-2-yl)-5-hexyloxy-phenol |
| | CAS Reg. No. 147315-50-2 |
| | Tinuvin 1577 |
| 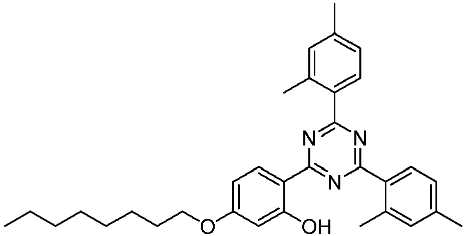 | 2-[4,6-Bis(2,4-dimethylphenyl)-1,3,5-triazin-2-yl]-5-(octyloxy)phenol |
| | CAS Reg. No. 2725-22-6 |
| | Chiguard 1064 |

In one embodiment, the anti-UV agent used in the compositions of the present invention is a benzotriazole-type anti-UV such as Chiguard 1064.

In another embodiment, the anti-UV agent used in the compositions of the present invention comprises a combination of a cycloaliphatic epoxy UV stabilizer with the UV absorber pentaerythritoltetrakis(2-cyano-3,3-diphenylacrylate. The structure of pentaerythritoltetrakis(2-cyano-3,3-diphenylacrylate is shown below.

| Structure | Name |
|---|---|
| 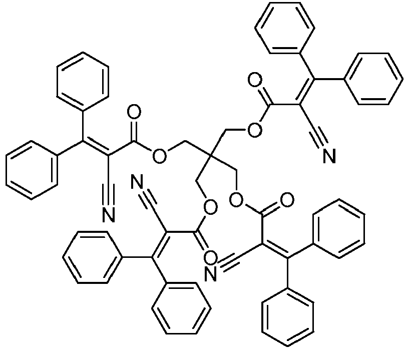 | Pentaerythritol tetrakis(2-cyano-3,3-diphenylacrylate) |
| | CAS Reg. No. 147315-50-2 |
| | Uvinul 3030 |

Cycloaliphatic epoxy compounds that are UV-stabilizers include, for example, cyclopentene oxide, cyclohexene oxide, 4-vinylcyclohexene oxide, 4-vinylcyclohexene dioxide, 3,4-epoxycyclohexylmethyl 3',4'-epoxycyclohexylcarboxylate (CAS Reg. No. 2386-87-0), 4-alkoxymethylcyclohexene oxides, acyloxymethylcyclohexene oxides, 1,3-bis(2-(3,4-epoxycyclohexyl)ethyl)-1,1,3,3-tetramethydisiloxane, 2-epoxy-1,2,3,4-tetrahydronaphthalene, and the like.

In another embodiment, the anti-UV agent used in the compositions of the present invention comprises the hindered amine light stabilizer (HALS) poly(4-hydroxy-2,2,6,6-tetramethyl-1-piperidine ethanol-alt-1,4-butanedioic acid), the structure of which is shown below, along with several other HALS stabilizers.

| Structure | Name |
|---|---|
| 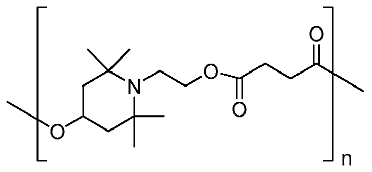 | 4-Hydroxy-2,2,6,6-tetramethyl-1-piperidinethanol-dimethyl succinate copolymer |
| | Also known as poly(4-hydroxy-2,2,6,6-tetramethyl-1-piperidine ethanol-alt-1,4-butanedioic acid) |
| | CAS Reg. No. 103597-45-1 |
| | Tinuvin 622LD, Chiguard 622LD |
| 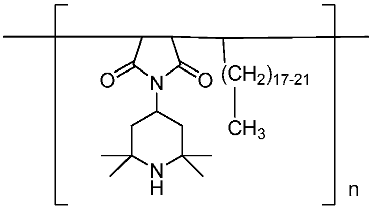 | Poly-{3-(eicosyltetracosyl)-1-[2,2,6,6-tetramethylpiperidin-4-yl]-pyrrolidine-2,5-dione} |
| | CAS Reg. No. 152261-33-1 |
| | Uvinul 5050H |
| 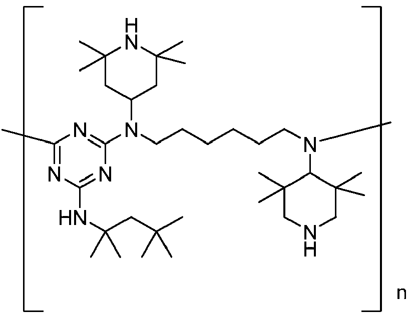 | Poly-{[6-[(1,1,3,3-tetramethylbutyl)amino]-1,3,5-triazine-2,4-diyl] |
| | CAS Reg. No. 71878-19-8, 70624-18-9 |
| | Chimassorb 944 |
| 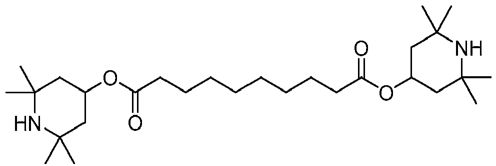 | Bis (2,2,6,6,-tetramethyl-4-piperidyl) sebacate |
| | CAS Reg. No. 52829-07-09 |
| | Tinuvin 770 |

In one embodiment, 0 to 20 weight percent of an anti-UV agent is present. In another embodiment, 0 to 10 weight percent of an anti-UV agent is present. In another embodiment, 1 to 10 weight percent of an anti-UV agent is present. In another embodiment, 2 to 5 weight percent of an anti-UV agent is present.

### Other Components

### Polybutene

The composition of the present invention may further comprise a polybutene. As used herein, the term "polybutene" refers to a polymer comprising greater than 75 weight percent of units, specifically greater than 80 weight percent of units, derived from 1-butene, 2-butene, 2-methylpropene (isobutene), or a combination thereof. The polybutene may be a homopolymer (as described below) or a copolymer. In some embodiments, the polybutene consists of units derived from 1-butene, 2-butene, 2-methylpropene (isobutene), or a combination thereof. In other embodiments, the polybutene is a copolymer that comprises 1 to less than 25 weight percent of a copolymerizable monomer such as ethylene, propylene, or 1-octene.

In one embodiment, the polybutene is a homopolymer.

In another embodiment, the polymer is a copolymer of isobutylene and 1-butene or 2-butene.

In another embodiment, the polybutene is a mixture comprising polybutene homopolymer and polybutene copolymer.

In another embodiment, the polybutene is a copolymer wherein the isobutylene derived units are from 40 to 99 weight percent of the copolymer, the 1-butene derived units are from 2 to 40 weight percent of the copolymer, and the 2-butene derived units are from 0 to 30 weight percent of the copolymer. In yet another embodiment, the polybutene is a terpolymer of the three units, wherein the isobutylene derived units are from 40 to 96 weight percent of the copolymer, the 1-butene derived units are from 2 to 40 weight percent of the copolymer, and the 2-butene derived units are from 2 to 20 weight percent of the copolymer. In yet another embodiment, the polybutene is a copolymer of isobutylene and 1-butene, wherein the isobutylene derived units are from 65 to 100 weight percent of the homopolymer or copolymer, and the 1-butene derived units are from 0 to 35 weight percent of the copolymer.

In another embodiment, the polybutene is a copolymer that comprises 1 to less than 25 weight percent of a copolymerizable monomer such as ethylene, propylene, or 1-octene. In some embodiments, the polybutene has a number average molecular weight of about 700 to about 1,000 atomic mass units. Suitable polybutenes include, for example, the isobutene-butene copolymer having a number average molecular weight of about 800 atomic mass units such as Indopol H50.

In another embodiment, the composition comprises a liquid polybutene. The liquid polybutene is a polyisobutene having a number average molecular weight of about 800 AMU. In a further embodiment, the polybutene is Indopol H50 from INEOS Oligomers or PB 800 from Daelim (Korea). In a further embodiment, the composition comprises about 2 to about 20 weight percent of Indopol H50 and preferably, about 3 to about 18 weight percent of Indopol H50 based on the total weight of the composition.

In one embodiment, the composition of the present invention comprises about 0 to about 20 weight percent of a polybutene as described herein based on the total weight of the composition and more specifically about 0 to about 10, more specifically about 1 to about 10 weight percent of a polybutene, and more specifically about 3 to about 8 weight percent of polybutene based on the total weight of the composition.

### Polyolefin Homopolymer

The composition of the present invention may further comprise one or more polyolefin homopolymers. The polyolefin homopolymer may be selected from the group consisting of polyethylene (PE), polypropylene (PP), and polyisobutene (PIB).Polybutene, which may be a homopolymer or copolymer, was described previously. Thus, the term "polyethylene homopolymer" means a homopolymer of ethylene. The term "polypropylene homopolymer" means a homopolymer of propylene. The term "polybutene homopolymer" means a homopolymer of butylene as discussed above.The term "polyisobutene homopolymer" means a homopolymer of polyisobutene.In some embodiments, the composition comprises less than 1 weight percent of polyethylene homopolymer, polypropylene homopolymer, or a mixture thereof. In some embodiments, the composition comprises less than 0.5 weight percent, or less than 0.1 weight percent, or none at all of these homopolymers. Polyethylene homopolymers include high density polyethylenes and low density polyethylenes (but not linear low density polyethylenes, which are copolymers). Polyethylene homopolymers and polypropylene homopolymers as defined herein are nonelastomeric materials.

In some embodiments, the total amount of polyethylene, polypropylene, or mixture thereof is 0to 40weight percent, more specifically, 0 to 30 weight percent, more specifically, 0 to 25 weight percent, more specifically 0 to 20 weight percent and more specifically about 2 to about 6 weight percent based on the total weight of the composition. In another embodiment, the total amount of polyethylene, polypropylene, or mixture thereof is 1to 35 weight percent and more specifically about 1 to 30 weight percent based on the total weight of the composition.

In some embodiments, the composition excludes polyethylene homopolymers and polypropylene homopolymers. In some embodiments, the composition is substantially free of polyethylene homopolymer and polypropylene homopolymer.In this context, "substantially free" means that no polyethylene homopolymer or polypropylene homopolymer is intentionally added to the composition.

In another embodiment, the polyolefin homopolymer is selected from the group consisting of polypropylene, and polyethyelene, or mixtures thereof.

In another embodiment, the polyolefin homopolymer is polypropylene which is present in an amount of about 2 to about 10 weight percent based on the total weight of the composition.

### Copolymer of Ethylene

The composition further comprises a copolymer of ethylene. For example, the copolymer may comprise ethylene and aC₃-C₁₂ alpha-olefin or ethylene and vinyl acetate or the like.

For brevity, the copolymer of ethylene and a C₃-C₁₂ alpha-olefinis sometimes referred to herein as an ethylene/alpha-olefin copolymer. The ethylene/alpha-olefin copolymer is defined herein as a copolymer comprising 25 to 95 weight percent, specifically 60 to 85 weight percent, of units derived from ethylene and 75 to 5 weight percent, specifically 40 to 15 weight percent, of units derived from a C₃ -C₁₂ alpha-olefin. In some embodiments, the ethylene/alpha-olefin copolymer is a random copolymer such as, for example, ethylene-propylene rubber ("EPR"), linear low density polyethylene ("LLDPE"), or very low density polyethylene ("VLDPE").

In other embodiments, the ethylene/alpha-olefin copolymer is a block copolymer comprising at least one block consisting of ethylene homopolymer or propylene homopolymer and one block that is a random copolymer of ethylene and a C₃ -C₁₂ alpha-olefin. Suitable alphaolefins include propene, 1-butene, and 1-octene. In some embodiments, the ethylene/alpha-olefin copolymer has a melt flow index of about 0.1 to about 20 grams per 10 minutes measured at 200° C and 2.16 kilograms force. In some embodiments, the ethylene/alpha-olefin copolymer has a density of about 0.8 to about 0.9 grams per milliliter. In some embodiments, the ethylene/alpha-olefin copolymer is an ethylene-propylene rubber. In some embodiments, the ethylene/alpha-olefin copolymer is provided in the form of a melt-kneaded blend comprising block copolymer, ethylene/alpha-olefin copolymer, and mineral oil.

In embodiments, the composition comprises more than 0 and up to about50 weight percent of the ethylene/C₃-C₁₂ alpha-olefin copolymer based on the total weight of the composition. In another embodiment, the composition comprises 1 to 10 weight percent of the ethylene/C₃-C₁₂ alpha-olefin copolymer

In one embodiment, the ethylene/alpha-olefin copolymer comprises a mixture of an ethylene-octene copolymer, a maleic anhydride grafted ethylene-octene copolymer, and LLDPE which are present in an amount of about 15 to 30 weight percent based on the total weight of the composition, where in the weight percent of ethylene-octene copolymer is greater than the amount of maleic anhydride grafted ethylene-octene copolymer. In one embodiment, the weight percent ratio of ethylene-octene copolymer to maleic anhydride grafted ethylene-octene copolymer is about 2.5:1 to 5:1. In one embodiment the weight percent ratio of ethylene-octene copolymer to LLDPE is about 5:1 to 10:1.

In some embodiments, the composition of the present invention comprises about 0 to 50 and more specifically about 0 to 40 weight percent and more specifically about 1 to about 50, about 1 to about 40, and about 1 to about 35 weight percent the ethylene/alpha-olefin copolymer. More specifically, the composition of the present invention comprises about 1 to about 10 percent of the ethylene/alpha-olefin copolymer based on the total weight of the composition

### Colorants

The compositions of the present invention optionally include one or more colorants.

Colorants suitable for compositions of the present invention include pigments and/or dyes. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 178, Pigment Red 179, Pigment Red 202, Pigment Violet 29, Pigment Blue 15, Pigment Blue 29, Pigment Blue 60, Pigment Green 7, Pigment Yellow 119, Pigment Yellow 147, Pigment Yellow 150, and Pigment Brown 24; or combinations comprising at least one of the foregoing pigments. Pigments are generally used in amounts of 0.001 to 3 parts by weight, based on 100 parts by weight of polycarbonate and any additional polymer.

Exemplary dyes are generally organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes. Dyes are generally used in amounts of 0.0001 to 5 parts by weight, based on 100 parts by weight basedonthe total weight of the composition.

In one embodiment, the colorant is a white pigment. The white pigment contributes to the white or off-white color of the composition. Suitable white pigments include, for example, calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudo-boehmite, aluminum hydroxide, alumina, modified alumina, lithopone, zeolite, hydrated halloysite, magnesium carbonate, magnesium hydroxide, and mixtures thereof. In some embodiments, the white pigment is zinc sulfide, titanium dioxide (including rutile titanium dioxide), or a mixture thereof. In some embodiments, the white pigment is titanium dioxide.

The composition comprises white pigment in an amount of about 0.5 to about 25 weight percent, based on the total weight of the composition. Within this range, the white pigment can be titanium dioxide in an amount of about 4 to about 20 weight percent, more specifically about 1 to about 8 weight percent, and more specifically about 4 to about 8weight percent based on the total weight of the composition.

In another embodiment, the colorant comprises a mixture of colorants. The mixture of colorants may include a white pigment such as TiO₂ and one or more additional colorants. In one embodiment the colorant comprises TiO₂ carbon black, Pigment Blue 29 and Pigment Red 101, and optionally one or more additional colorants. In this embodiment, the total amount of the colorant is about 5 to about 10 weight percent, based on the total weight of the composition. In another embodiment the colorant comprises TiO₂ carbon black, Pigment Blue 29 and Pigment Red 101. In this embodiment, the total amount of the colorant is about 5 to about 10 weight percent, based on the total weight of the composition.

### Other Additives

In addition to the poly(phenylene ether) and the block copolymer, the composition comprises a plasticizer. As used herein, the term "plasticizer" refers to a compound that is effective to plasticize the composition as a whole or at least one component of the composition. In some embodiments, the plasticizer is effective to plasticize the poly(phenylene ether). The plasticizers are typically low molecular weight, relatively nonvolatile molecules that dissolve in a polymer, separating the chains from each other and hence facilitating reptation and reducing the glass transition temperature of the composition. In some embodiments, the plasticizer has a glass transition temperature (T_{g}) of about -110 to -50° C, is miscible primarily with poly(phenylene ether)resin, and has a molecular weight less than or equal to 1,000 grams per mole.

Suitable plasticizers include, for example, benzoate esters (including dibenzoate esters), pentaerythritol esters, triaryl phosphates (including halogen substituted triaryl phosphates), phthalate esters, trimellitate esters, pyromellitate esters, and the like, and mixtures thereof.

In some embodiments, the plasticizer is a triaryl phosphate. Suitable triaryl phosphates include those having the structure

The composition may, optionally, further comprise one or more other additives known in the thermoplastics arts. Useful additives include, for example, stabilizers, mold release agents, processing aids, drip retardants, nucleating agents, dyes, pigments, antioxidants, anti-static agents, blowing agents, metal deactivators, antiblocking agents, nanoclays, fragrances (including fragrance-encapsulated polymers), and the like, and combinations thereof. Additives can be added in amounts that do not unacceptably detract from the desired appearance and physical properties of the composition. Such amounts can be determined by a skilled artisan without undue experimentation.

In some embodiments, the composition can exclude or be substantially free of components other than those described above. For example, the composition can be substantially free of other polymeric materials, such as homopolystyrenes (including syndiotactic polystyrenes), polyamides, polyesters, polycarbonates, and polypropylene-graft-polystyrenes. In this context, the term "substantially free" means that none of the specified component is intentionally added.

As the composition is defined as comprising multiple components, it will be understood that each component is chemically distinct, particularly in the instance that a single chemical compound may satisfy the definition of more than one component.

### Composition

As indicated previously, in one aspect, the invention comprises a polymer composition, comprising:
(a) 5 to 55 weight percent of a poly(phenylene ether)-polysiloxane copolymer;
(b) 1 to 65 weight percent of a hydrogenated block copolymer of an alkenyl aromatic compound and a conjugated diene;
(c) 0 to 20 weight percent of a polybutene;
(d) 30 to 60 weight percent of magnesium hydroxide;
(e) 0 to 20 weight percent of an anti-UV agent;
(f) 0 to 50 weight percent of a copolymer of ethylene and a C₃-C₁₂ alpha-olefin; and
(g) 0 to 40 weight percent of a polyolefin homopolymer,

In one embodiment of this aspect, the poly(phenylene ether)-polysiloxane copolymer is a poly(phenylene ether)-poly(phenylene ether)-polysiloxane block copolymer.

In a further embodiment, the poly(phenylene ether)-polysiloxane block copolymer wherein the poly(phenylene ether)-polysiloxane copolymer has an intrinsic viscosity of 0.385-0.425 dL/g and 4-6 percent siloxane incorporation. In this embodiment, the poly(phenylene ether) block comprises phenylene units having the structure 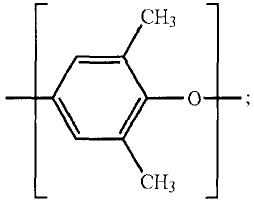 and the polysiloxane block has the structure

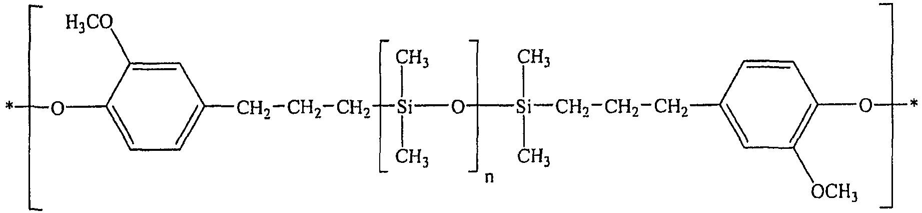

In this and other embodiments, the composition comprises 10 to 45 weight percent of a poly(phenylene ether)-polysiloxane copolymer. More specifically, the composition comprises 15 to 35 weight percent of a poly(phenylene ether)-polysiloxane copolymer. More specifically, the composition comprises 18 to 32 weight percent of a poly(phenylene ether)-polysiloxane copolymer.

In this and other embodiments, the composition comprises a hydrogenated block copolymer of an alkenyl aromatic compound and a conjugated diene. In a further embodiment, the hydrogenated block copolymer is a linear triblock polystyrene-poly(ethylene-butylene)-polystyrene copolymer, having a polystyrene count of about 37 to 44 weight percent and a number average molecular weight of 160,000 atomic mass units, such as supplied by Kraton Performance Polymers, Inc. as A1536 HU and A1536 HS. In a further embodiment, the hydrogenated block copolymer is a linear triblock polystyrene-poly(ethylene-butylene)-polystyrene copolymer, having a polystyrene count of 58%, such as by Kraton Performance Polymers, Inc. as A 1535. In a further embodiment, the hydrogenated block copolymer is a linear triblock polystyrene-poly(ethylene-butylene)-polystyrene copolymer having a polystyrene content of 30%, such as supplied by Kraton Performance Polymers, Inc. as G1650. In a further embodiment, the hydrogenated block copolymer is a melt-kneaded blend comprising about 35 weight percent polystyrene-poly(ethylene-butylene)-polystyrene, about 20 weight percent ethylene-propylene rubber, and about 45 weight percent mineral oil, such as supplied by Sumitomo Chemical Co. as SEBS SB2400".

In this and other embodiments, the composition comprisesabout 5 to about 50 weight percent and more preferably about 10 to about 35 weight percent of the hydrogenated block copolymer, based on the total weight of the composition. Within this range, the hydrogenated block copolymer amount specifically may be about 11 to about 20 weight percent based on the total weight of the composition.

In this and other embodiments, the composition comprises a polybutene. In a further embodiment, the polybutene is PIB PB800 which has the same specifications as Indopal H50, and is available from DaelimIn a further embodiment, the composition comprises about 2 to about 20 weight percent of polybutene and preferably, about 3 to about 18 weight percent of polybutene based on the total weight of the composition.

In this and other embodiments, the composition comprises one or more flame retardants, where in at least one of the flame retardants is magnesium hydroxide. Typically, 30 weight percent to 60 weight percent of the flame retardant is present. In a further embodiment, the flame retardant comprises magnesium hydroxide, RDP, and BDADP.

In this and other embodiments, the composition comprises an anti-UV agent selected from the group consisting of a benzotriazole-type UV absorber, a triazine-type UV absorber, and a hindered amine light stabilizer, or combinations thereof. In a further embodiment, the anti-UV agent selected from the group consisting of 2-(2H-benzotriazol-2-yl)-4,6-bis(1-methyl-1-phenylethyl)phenol, poly(4-hydroxy-2,2,6,6-tetramethyl-1-piperidine ethanol-alt-1,4-butanedioic acid), 2-[4,6-bis(2,4-dimethylphenyl)-1,3,5-triazin-2-yl]-5-(octyloxy)phenol, or mixtures thereof.

In this and other embodiments, the composition comprises 0 to 8 weight percent of a colorant. In a further embodiment, the colorant is TiO₂, used alone or in combination with one or more additional colorants. In a further embodiment, the colorant comprises TiO₂ Pigment Blue 29, and Pigment Red 101. In a further embodiment, the colorant comprises TiO₂ Pigment Blue 29, and Pigment Red 178. In a further embodiment, the colorant comprises, TiO₂ Pigment Blue 29, and Pigment Red 178, and Pigment Brown 24. In a further embodiment, the colorant comprises, TiO₂ Pigment Blue 29, and Pigment Red 178, Pigment Brown 24, and Carbon Black.

In a further embodiment, the composition comprises:
(a) 15 to 40 weight percent of a poly(phenylene ether)-polysiloxane copolymer;
(b) 5 to 25 weight percent of a hydrogenated block copolymer of an alkenyl aromatic compound and a conjugated diene;
(c) 1 to 10 weight percent of a polybutene;
(d) 30 to 50 weight percent of magnesium hydroxide; and
(e) 1 to 10 weight percent of an anti-UV agent.

In a further embodiment, the composition comprises:
(a) 15 to 40 weight percent of a poly(phenylene ether)-polysiloxane copolymer;
(b) 5 to 25 weight percent of a hydrogenated block copolymer of an alkenyl aromatic compound and a conjugated diene;
(c) 1 to 10 weight percent of a polybutene;
(d) 30 to 50 weight percent of magnesium hydroxide alone or in combination with RDP or BDADP; and
(e) 1 to 10 weight percent of an anti-UV agent which selected from the group consisting of anti-UV agent selected from the group consisting of a benzotriazole-type UV absorber, a triazine-type UV absorber, and a hindered amine light stabilizer, or combinations thereof.

In a further embodiment, the composition comprises:
(a) 15 to 40 weight percent of a poly(phenylene ether)-polysiloxane copolymer;
(b) 5 to 25 weight percent of a hydrogenated block copolymer of an alkenyl aromatic compound and a conjugated diene;
(c) 1 to 10 weight percent of a polybutene;
(d) 30 to 50 weight percent of magnesium hydroxide alone or in combination with RDP or BDADP; and
(e) 1 to 10 weight percent of an anti-UV agent which selected from the group consisting of anti-UV agent selected from the group consisting of 2-(2H-benzotriazol-2-yl)-4,6-bis(1-methyl-1-phenylethyl)phenol, poly(4-hydroxy-2,2,6,6-tetramethyl-1-piperidine ethanol-alt-1,4-butanedioic acid), 2-[4,6-bis(2,4-dimethylphenyl)-1,3,5-triazin-2-yl]-5-(octyloxy)phenol, or mixtures thereof.

In a further embodiment, the composition comprises:
(a) 10 to 40 weight percent of a poly(phenylene ether)-polysiloxane copolymer which is a poly(phenylene ether)-poly(phenylene ether)-polysiloxane block copolymer wherein the poly(phenylene ether) block comprises phenylene units having the structure 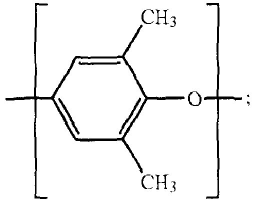 and the polysiloxane block has the structure 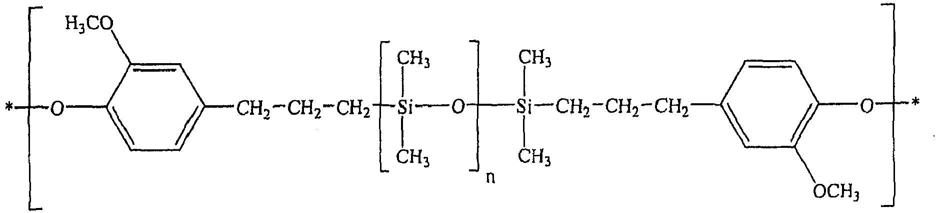 and wherein the poly(phenylene ether)-poly(phenylene ether)-polysiloxane block copolymer has an intrinsic viscosity of 0.385-0.425 dL/g and 4-6 percent siloxane incorporation;
(b) 5 to 25 weight percent of a hydrogenated block copolymer of an alkenyl aromatic compound and a conjugated diene;
(c) 0 to 10 weight percent of a polybutene;
(d) 30 to 60 weight percent of magnesium hydroxide which is a high purity magnesium hydroxide that has been surface treated with an amino polysiloxane;
(e) 0 to 10 weight percent of an anti-UV agent selected from the group consisting of a benzotriazole-type UV absorber, a triazine-type UV absorber, and a hindered amine light stabilizer, or combinations thereof;
(f) 1 to 40 weight percent of a copolymer of ethylene and a C₃-C₁₂ alpha-olefin; and
(g) 0 to 30 weight percent of a polyolefin homopolymer.

In a further embodiment, the anti-UV agent is selected from the group consisting of 2-(2H-benzotriazol-2-yl)-4,6-bis(1-methyl-1-phenylethyl)phenol, poly(4-hydroxy-2,2,6,6-tetramethyl-1-piperidine ethanol-alt-1,4-butanedioic acid),2-[4,6-bis(2,4-dimethylphenyl)-1,3,5-triazin-2-yl]-5-(octyloxy)phenol, or mixtures thereof.

In a further embodiment, the composition comprises 1 to 8 weight percent of a colorant based on the total weight of the composition. In another embodiment, the composition comprises 4 to 8 weight percent of TiO₂ alone or in combination with other colorants based on the total weight of the composition.

In a further embodiment, the composition comprises:
(a) 15 to 25 weight percent of a poly(phenylene ether)-polysiloxane copolymer;
(b) 10 to 25 weight percent of a hydrogenated block copolymer of an alkenyl aromatic compound and a conjugated diene;
(c) 3 to 8 weight percent of a polybutene;
(d) 30 to 45 weight percent of magnesium hydroxide;
(e) 2 to 5 weight percent of an anti-UV agent;
(f) 1 to 10 weight percent of a copolymer of ethylene and a C₃-C₁₂ alpha-olefin; and
(g) 1 to 30 weight percent of a polyolefin homopolymer.

In a further embodiment, the composition comprises:
(a) 15 to 25 weight percent of a poly(phenylene ether)-polysiloxane copolymer;
(b) 10 to 15 weight percent of a hydrogenated block copolymer of an alkenyl aromaticcompound and a conjugated diene;
(c) 3 to 8 weight percent of a polybutene;
(d) 30 to 45 weight percent of magnesium hydroxide;
(e) 2 to 5 weight percent of an anti-UV agent wherein the anti-UV agent is selected from the group consisting of a benzotriazole-type UV absorber, a triazine-type UV absorber, and a hindered amine light stabilizer, or combinations thereof;
(f) 1 to 10 weight percent of a copolymer of ethylene and a C₃-C₁₂ alpha-olefin; and
(g) 1 to 30 weight percent of a polyolefin homopolymer,

In a further embodiment, the composition comprises:
(a) 10 to 25 weight percent of a poly(phenylene ether)-polysiloxane copolymer;
(b) 10 to 15 weight percent of a hydrogenated block copolymer of an alkenyl aromaticcompound and a conjugated diene;
(c) 3 to 8 weight percent of a polybutene;
(d) 30 to 45 weight percent of magnesium hydroxide;
(e) 2 to 5 weight percent of an anti-UV agent wherein the anti-UV agent is selected from the group consisting of 2-(2H-benzotriazol-2-yl)-4,6-bis(1-methyl-1-phenylethyl)phenol, poly(4-hydroxy-2,2,6,6-tetramethyl-1-piperidine ethanol-alt-1,4-butanedioic acid),2-[4,6-bis(2,4-dimethylphenyl)-1,3,5-triazin-2-yl]-5-(octyloxy)phenol, or mixtures thereof;
(f) 1 to 10 weight percent of a copolymer of ethylene and a C₃-C₁₂ alpha-olefin; and
(g) 1 to 30 weight percent of a polyolefin homopolymer.

In a further embodiment, the composition comprises:
(a) 10 to 25 weight percent of a poly(phenylene ether)-polysiloxane copolymer;
(b) 10 to 15 weight percent of a hydrogenated block copolymer of an alkenyl aromaticcompound and a conjugated diene;
(c) 3 to 8 weight percent of a polybutene;
(d) 30 to 45 weight percent of magnesium hydroxide;
(e) 2 to 5 weight percent of an anti-UV agent wherein the anti-UV agent is selected from the group consisting of 2-(2H-benzotriazol-2-yl)-4,6-bis(1-methyl-1-phenylethyl)phenol, poly(4-hydroxy-2,2,6,6-tetramethyl-1-piperidine ethanol-alt-1,4-butanedioic acid),2-[4,6-bis(2,4-dimethylphenyl)-1,3,5-triazin-2-yl]-5-(octyloxy)phenol, or mixtures thereof;
(f) 1 to 10 weight percent of a copolymer of ethylene and a C₃-C₁₂ alpha-olefin; and
(g) 1 to 30 weight percent of a polyolefin homopolymer; and
(h) 0 to 8 weight percent of a colorant.

In a further embodiment, the composition comprises:
(a) 10 to 25 weight percent of a poly(phenylene ether)-polysiloxane copolymer;
(b) 10 to 15 weight percent of a hydrogenated block copolymer of an alkenyl aromaticcompound and a conjugated diene;
(c) 3 to 8 weight percent of a polybutene;
(d) 30 to 45 weight percent of magnesium hydroxide;
(e) 2 to 5 weight percent of an anti-UV agent wherein the anti-UV agent is selected from the group consisting of 2-(2H-benzotriazol-2-yl)-4,6-bis(1-methyl-1-phenylethyl)phenol, poly(4-hydroxy-2,2,6,6-tetramethyl-1-piperidine ethanol-alt-1,4-butanedioic acid),2-[4,6-bis(2,4-dimethylphenyl)-1,3,5-triazin-2-yl]-5-(octyloxy)phenol, or mixtures thereof;
(f) 1 to 10 weight percent of a copolymer of ethylene and a C₃-C₁₂ alpha-olefin; and
(g) 1 to 30 weight percent of a polyolefin homopolymer; and
(h) 1 to 8 weight percent of a colorant.

In a further embodiment, the composition comprises 2 to 6 weight percent of a polyolefin homopolymer,

In a further embodiment, the composition comprises:
(a) 10 to 25 weight percent of a poly(phenylene ether)-polysiloxane copolymer;
(b) 10 to 15 weight percent of a hydrogenated block copolymer of an alkenyl aromaticcompound and a conjugated diene;
(c) 3 to 8 weight percent of a polybutene;
(d) 30 to 45 weight percent of magnesium hydroxide;
(e) 2 to 5 weight percent of an anti-UV agent wherein the anti-UV agent is selected from the group consisting of 2-(2H-benzotriazol-2-yl)-4,6-bis(1-methyl-1-phenylethyl)phenol, poly(4-hydroxy-2,2,6,6-tetramethyl-1-piperidine ethanol-alt-1,4-butanedioic acid),2-[4,6-bis(2,4-dimethylphenyl)-1,3,5-triazin-2-yl]-5-(octyloxy)phenol, or mixtures thereof;
(f) 1 to 10 weight percent of a copolymer of ethylene and a C₃-C₁₂ alpha-olefin; and
(g) 2 to 6 weight percent of a polyolefin homopolymer; and
(h) 4 to 8 weight percent of a colorant comprising TiO₂.

In all embodiments, the magnesium hydroxide is a high purity magnesium hydroxide that has been surface treated with an amino polysiloxane and wherein the poly(phenylene ether)-polysiloxane copolymer is a mixture of a polyphenylene ether) homopolymer and a poly(phenylene ether)-polysiloxane block copolymer according to the claims.

### Process and Articles

In another aspect, the invention provides a process for jacketing an electrical cable or plug. The process comprises extrusion coating an electrical cableor plug with a composition as described in the previous embodiments.

In another aspect, the invention provides an extrusion coated article comprising the composition as described in the previous embodiments. In one embodiment, the article is an electrical wire jacketed with the composition of the present invention.

In another aspect, the invention provides an injection molded article comprising the composition as described in the previous embodiments.

The following examples illustrate the scope of the invention. The examples and preparations which follow are provided to enable those skilled in the art to more clearly understand and to practice the present invention.

### Examples

The examples of the compositions of the present invention, annotated hereinafter as "EX." and their comparative examples, annotated hereinafter as "CE", employed the materials listed in Table 1. All weight percents employed in the examples are based on the weight percent of the entire composition except where stated otherwise.

**Table 1**

| Component | Trade name and Supplier |
|---|---|
| PPE-Polysiloxane Copolymer, 0.385-0.425 dL/g IV | See PPE-Siloxane Synthesis accompanying Table 2. |
| PPE | Poly(2,6-dimethyl-1,4-phenylene ether), CAS Reg. No. 24938-67-8, having an intrinsic viscosity of 0.46 deciliters per gram, measured in chloroform at 25° C., and obtained as PPO 646 resin from SABIC Plastics ("0.46 IV PPE"). |
| SEBS-I | A linear triblock polystyrene-poly(ethylene-butylene)-polystyrene copolymer, having a polystyrene count of about 37 to 44 weight percent and a number average molecular weight of 160,000 atomic mass units, supplied as an undusted powder from Kraton Performance Polymers, Inc. as A1536 HU and A1536 HS |
| SEBS-II | A linear triblock polystyrene-poly(ethylene-butylene)-polystyrene copolymer, having a polystyrene count of 58%, supplied as an undusted powder from Kraton Performance Polymers, Inc. as A1535. |
| SEBS- IV | A linear triblock polystyrene-poly(ethylene-butylene)-polystyrene copolymer, CAS Reg. No. 66070-58-4, having a polystyrene content of 30%, obtained from Kraton Performance Polymers, Inc. as G1650. |
| SEBS-V | A melt-kneaded blend comprising about 35 weight percent polystyrene-poly(ethylene-butylene)-polystyrene, about 20 weight percent ethylene-propylene rubber, and about 45 weight percent mineral oil, obtained as TPE-SB2400 from Sumitomo Chemical Co. ("SEBS SB2400"). |
| PIB-I | A liquid polybutene, specifically a polyisobutene, having a number average molecular weight of about 800 AMU, was obtained as Indopol H50 from INEOS Oligomers. |
| PIB-II | PB800-Daelim Corporation (Korea) |
| PP | Polypropylene homopolymer, CAS Reg. No. 9003-07-0, available from SABIC as 570P. |
| LLDPE | Linear low-density polyethylene, CAS Reg. No. 66070-58-4, available from Unicar as NUCG-5381. |
| POE-I | Ethylene-octene copolymer,CAS Reg. No. 26221-73-8, available from Exxon Mobil as Exact 8210. |
| POE-II | Maleic anhydride grafted ethylene-octene copolymer available from Dupont as Fusabond N493. |
| AlP | A flame retardant consisting of aluminum tris(diethyl phosphinate), available commercially from Clariant Corporation as EXOLIT OP 1230. |
| MPP | Melamine polyphosphate, CAS Reg. No. 218768-84-4, obtained from Budenheim as Budit 3141. |
| BDADP | Bisphenol A bis-diphenylphosphate, CAS Reg. No. 181028-79-5, commercially available from DAIHACHI Chemical Industry Co., Ltd. under the trade name of CR741. |
| Mg(OH)₂-I | Magnesium hydroxide, CAS Reg. No. 1309-32-8, was obtained from Kyowa Chemical Industry Co. as Kisuma 5A |
| Mg(OH)₂-II | Magnesium hydroxide, CAS Reg. No. 1309-32-8, was obtained from Albemarleas Magnifin H-5IV |
| MgO | Magnesium oxide, CAS Reg. No. 1309-48-4, commercially available under the brand name Kyowa Mag from Kyowa Chemical Industry Co. Ltd.. |
| ZnS | Zinc sulfide, CAS Reg. No. 1314-98-3, was obtained from Sachtleben as Sachtolith HD. |
| Celloxide | (3'-4'-Epoxycyclohexane)methyl 3'-4'-epoxycyclohexyl-carboxylate, CAS Reg. No. 2386-87-0 obtained from Daicel as Celloxide 2021P |
| Tinuvin 234 | 2-(2H-benzotriazol-2-yl)-4,6-bis(1-methyl-1-phenylethyl)phenol, CAS Reg. No. 70321-86-17, obtained from BASF. |
| Chiguard 5431 | 2,2'-Methylene bis(6-(2H-benzotriazol-2-yl)-4-, 1,1,3,3,tetramethylbutyl)phenol), CAS Reg. No. 103597-45-1, obtained from Chitec. |
| Cyasorb UV-3638 | 2,2'-(1,4-phenylene)bis[4H-3,1-benzoxazin-4-one], CAS Reg. No. 18600-59-4, obtained from Cytec. |
| Uvinul 3030 | Pentaerythritol tetrakis(2-cyano-3,3-diphenylacrylate), CAS Reg. No. 17867-58-4, obtained from BASF. |
| Uvinul 5050H | A sterically hindered amine oligomer, CAS Reg. No. 152261-33-1, obtained from BASF. |
| Chimassorb 944 | Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]), CAS Reg. No. 71878-19-8, 70624-18-9, obtained from BASF. |
| Tinuvin 770 | Bis(2,2,6,6,-tetramethyl-4-piperidyl)sebaceate, CAS. Reg. No. 52829-07-9, obtained from BASF. |
| Tinuvin 622LD | Poly(4-hydroxy-2,2,6,6-tetramethyl-1-piperidine ethanol-alt-1,4-butanedioic acid), CAS Reg. No. 65447-77-0, obtained from BASF. |
| Chiguard 622LD | Poly(4-hydroxy-2,2,6,6-tetramethyl-1-piperidine ethanol-alt-1,4-butanedioic acid), CAS Reg. No. 65447-77-0, obtained from Chitec. |
| Tinuvin 1577 | 2-(4,6-Diphenyl-1,3,5-triazin-2-yl)-5-hexyloxy-phenol, CAS Reg. No. 147315-50-2, obtained from BASF. |
| Chiguard 1064 | 2-[4,6-bis(2,4-dimethylphenyl)-1,3,5-triazin-2-yl]-5-(octyloxy)phenol, CAS Reg. No. 2725-22-6, obtained from Chitec. |
| AO-I | Stearyl-3-(3'5'-di-t-butyl-4-hydroxyphenyl) propionate, CAS Reg. No. 2082-79-3, commercially available under the trade name Irganox 1076 from BASF. |
| AO-II | Tetrakis(2,4-di-tert-butylphenyl)-4,4-biphenyldiphosphonite, CAS Reg. No. 38613-77-3, commercially available under the trade name of Hostanox P-EPQ from Clariant. |
| MD | 2',3-bis[[3-[3,5-di-tert-butyl-4-hydroxyphenyl]propionyl] propionohydrazide, CAS Reg. No. 32687-78-8, commercially available under the trade name Irganox MD 1024 from BASF. |
| Erucamide | Erucamide, CAS Reg. No. 112-84-5, was obtained from Crompton Corporation as Kemamide E Ultra.. |
| Fragrance | A polyethylene-encapsulated fragrance obtained from International Flavors and Fragrances as IFI-7191 PBD. |
| TiO₂-I | Titanium dioxide having an average particle size of 0.2 micrometers was obtained from DuPont as Ti-Pure R103-15. |
| TiO2-II | Titanium dioxide having an average particle size of 0.2 micrometers was obtained from Huntsman as TIOXIDE R-TC30. |
| Carbon Black | Carbon black having an iodine absorption of 231 grams per kilogram determined according to ASTM D1510-02a was obtained from Cabot as Monarch 800. |
| Pigment Blue 29 | Na₆Al₄Si₆S₄O₂₀ (Ultramirine Blue), CAS Reg. No. 57455-37-5, obtained as Ultramarine 5085 from Holiday Pigments Ltd. |
| Pigment Red 101 | Fe₂O₃ (Ferric Oxide), CAS Reg. No. 1309-37-1, obtained as ColorTherm Red 180 M from Bayer |

### Poly(Phenylene Ether)-Siloxane Copolymer Synthesis

The material used in the Examples was prepared as described for Example 16 in US 8,017,697.

The reactor and the 2,6-dimethylphenol addition tank were rinsed with warm toluene to assure their cleanliness. The reaction was purged with nitrogen to achieve an oxygen concentration of less than 1%. The reactor was charged with initial toluene (fresh or recycled), and this toluene was stirred at 500 rotations per minute (rpm). The temperature of the initial toluene was adjusted to the "initial charge" temperature of 30 °C and maintained at that temperature during addition of the initial charge of 2,6-dimethylphenol from the addition tank to the reaction vessel. After the addition of the initial charge of 2,6-dimethylphenol was complete, the reaction vessel was charged with the eugenol-capped polydimethylsiloxane, the di-n-butylamine, the dimethyl-n-butylamine, the diamine, and the copper catalyst. Oxygen flow and further monomer addition were initiated, and the oxygen flow was regulated to maintain a head space concentration less than 17 percent. During further monomer addition, cooling water supply temperature was adjusted to maintain the temperature specified as "Temp, addition (°C)" in Table 2. After monomer addition was complete, the monomer addition line was flushed with toluene and the reaction temperature was increased to the temperature specified as "Temp, build (°C)" in Table 2. This temperature adjustment was conducted over the time period specified as "Ramp time (min)", and at the rate specified as "Ramp slope (°C/min)" in Table 2. The reaction was continued until a pre-determined time point is reached. The pre-determined end point is the time at which target intrinsic viscosity and maximum siloxane incorporation are attained and is typically 80 to 160 minutes after 2,6-dimethylphenyl addition ends. Once the time point reached, the oxygen flow was stopped. The reaction mixture was then heated to 60 °C and pumped to a chelation tank containing aqueous chelant solution. The resulting mixture was stirred and held at 60 °C for one to two hours. The light (organic) and heavy (aqueous) phases were separated by decantation, and the heavy phase was discarded. A small portion of the light phase was sampled and precipitated with isopropanol for analysis, and the remainder of the light phase was pumped to a precipitation tank and combined with methanol antisolvent in a weight ratio of 3 parts antisolvent to 1 part light phase. The precipitate was filtered to form a wet cake, which was re-slurried three times with the same antisolvent and dried under nitrogen until a toluene concentration less than 1 weight percent was obtained.

Reaction conditions and properties of the resulting product is summarized in Table 2. "Total volatiles (%)", which is weight percent of volatiles in the isolated product, was determined by measuring the percent weight loss accompanying drying for 1 hour at 110 °C under vacuum; "Residual Cu (ppm)", which is the residual catalyst concentration expressed as parts per million by weight of elemental copper, was determined by atomic absorption spectroscopy; for properties as a function of reaction time, samples were removed from the reactor and precipitated (without prior chelation of catalyst metal) by addition of one volume of reaction mixture to three volumes of room temperature isopropanol to yield a precipitate that was filtered, washed with isopropanol, and dried prior to ¹H NMR (to determine weight percent siloxane and siloxane incorporation efficiency) and intrinsic viscosity analyses.

**Table 2**

| REACTION CONDITIONS | |
|---|---|
| Toluene Source | Recyc. |
| DMBA level (%) | 1.2 |
| Solids (%) | 23 |
| Polysiloxane chain length | 45 |
| Polysiloxane loading (%) | 5 |
| Initial 2,6-DMP (%) | 7.9 |
| O: 2,6-dimethylphenol mole ratio | 0.98 |
| Catalyst (%) | 0.75 |
| Temp., initial charge (°C.) | 21 |
| Temp., addition (°C.) | 38 |
| Temp., build (°C.) | 49 |
| Ramp time (min) | 30 |
| Ramp slope ((°C./min) | 0.37 |
| Reaction time (min) | 200 |

| FINAL PRODUCT PROPERTIES | |
|---|---|
| Mol. Wt. <10k (10%) | 11 |
| Mol. Wt. >100K (%) | 16 |
| IV, end of rxn. (dL/g) | 0.45 |
| IV, end of cheln. (dL/g) | 0.39 |
| M_{w}, end of rxn. (AMU) | 64000 |
| Mₙ, end of rxn. (AMU) | 23000 |
| M_{w}/Mₙ, end of rxn. | 2.8 |
| M_{w}, end of cheln. (AMU) | 56000 |
| Mₙ, end of cheln. (AMU) | 20000 |
| M_{w}/Mₙ, end of cheln. | 2.7 |
| Weight % siloxane (%) | 4.78 |
| Silox. Incorp. Effic. (%) | 96 |
| Weight % Biphenyl (%) | 1.26 |
| Total OH (ppm) | - |
| Total volatiles (%) | - |
| Residual Cu (ppm) | - |

| PROPERTIES AS A FUNCTION OF REACTION TIME | |
|---|---|
| Wt. % siloxane, 80 min (%) | 1.68 |
| Wt. % siloxane, 110 min (%) | 4.71 |
| Wt. % siloxane, 200 min (%) | 4.93 |
| Silox. Incorp. Effic., 80 min (%) | 33.64 |
| Silox. Incorp. Effic., 110 min (%) | 94.26 |
| Silox. Incorp. Effic., 200 min (%) | 98.57 |
| IV, 80 min (dL/g) | 0.087 |
| IV, 110 min (dL/g) | 0.36 |
| IV, 200 min (dL/g) | 0.452 |

### Method

The compositions and comparative examples were prepared by compounding on a 37mm Toshiba SE twin screw extruder (Toshiba TSE 37BS). The liquid flame retardant was fed by a side feeder. All other materials were blended together and fed by the main feeder. The strand of composite was cut into pellets and dried for further molding and wire extrusion operation. The testing was conducted on pellets, molded parts and extruded wires.

Wire samples were extruded on a Wai Tak Lung Machinery Co.extruder (WTL EXL50) with melt temperature at 240 °C without pre-heating of the copper conductor. The line speed was set at 70 m/min for wire. The wire configuration was AWG18 copper conductor with a coating thickness of 0.55 mm. The line speed was set at 20m/min for cable. And the cable configuration was H03Z1Z1H2-F.

The compounding conditions that were used are summarized in Table 3.

**Table 3**

| Parameters | Unit | Set Values |
|---|---|---|
| Zone 1 Temp | °C | 50 |
| Zone 2 Temp | °C | 180 |
| Zone 3 Temp | °C | 225 |
| Zone 4 Temp | °C | 245 |
| Zone 5 Temp | °C | 245 |
| Zone 6 Temp | °C | 245 |
| Zone 7 Temp | °C | 245 |
| Zone 8 Temp | °C | 245 |
| Zone 9 Temp | °C | 245 |
| Zone 10 Temp | °C | 245 |
| Zone 11 Temp | °C | 245 |
| Die Temp | °C | 255 |
| Screw speed | Rpm | 400 |
| Throughput | kg/hr | 35 |

The molding conditions that were used are summarized in Table 4.

**Table 4**

| Parameters | Unit | Set Values |
|---|---|---|
| Pre-drying time | Hour | 4 |
| Pre-drying temp | °C | 80 |
| Hopper temp | °C | 50 |
| Zone 1 temp | °C | 235 |
| Zone 2 temp | °C | 250 |
| Zone 3 temp | °C | 250 |
| Nozzle temp | °C | 245 |
| Mold temp | °C | 40 |
| Screw speed | Rpm | 100 |
| Back pressure | Kgf/cm² | 90 |
| Decompression | Mm | 6 |
| Injection time | S | 2 |
| Holding time | S | 8 |
| Cooling time | S | 20 |
| Shot volume | Mm | 58 |
| Switch point | Mm | 10 |
| Injection speed | mm/s | 25 |
| Holding pressure | Kgf/cm² | 600 |
| Cushion | Mm | 4 |

### Testing

The ASTM and UL tests used to characterize the compositions of the present invention, and the comparative examples, are summarized below in Table 5.

**Table 5**

| Test | Description |
|---|---|
| Delta E (ΔE) afterUV Weathering | ASTM D 4459. The total UVweathering time was 100-400 hours and color of the color chip was measured every 100 hours. Suitable compositions of the present invention have a 300 hour color shift of 12 or less. |
| Color | ASTM D 2244. The color L, a, b values under a D65 or CWF 2 light source were recorded for determining CIELAB color shifts (ΔE). |
| Cable Vertical Flame Test | EN 50265-2-1 The test specimen was VDE H03Z1Z1H2-F cable. |
| Smoke Density for Molded Plaque | ASTM E 622 The test specimen was 100x100x1mm molded plaque and the test mode was flame mode. |
| Smoke Density for Cable | EN 50268-2 The test specimen was VDE H03Z1Z1H2-F cable. |

### Results

Tables 6-7, provided below, summarize the testing results for Comparative Examples and Examples of compositions of the present invention.

**Table 6**

| Item Description | Unit | CE1 | Ex1 | EX2 | EX3 | EX4 | EX5 |
|---|---|---|---|---|---|---|---|
| PPE, 0.46IV | % | 15 | | | | | |
| PPE-Siloxane, 0.40 IV | % | | 15 | 15 | 20 | 20 | 20 |
| SEBS, Kraton G1650 | % | 12 | 12 | 12 | 12 | 12 | 12 |
| POE, Exact 8210 | % | 20 | 20 | 20 | 19 | 19 | 19 |
| POE-g-MAH, Fusabond N493 | % | 5 | 5 | 5 | 5 | 5 | 5 |
| LLDPE, NUCG5381 | % | 3 | 3 | 3 | 3 | 3 | 3 |
| PIB, PB800 | % | 5 | 5 | 5 | 5 | 5 | 5 |
| MDH, Magnifin H-5IV | % | 40 | 40 | 40 | 36 | 36 | 36 |
| AO, Irganox 1076 | % | 0.75 | 0.75 | 0.75 | 0.75 | 0.75 | 0.75 |
| AO, Hostanox P-EPQ | % | 0.25 | 0.25 | 0.25 | 0.25 | 0.25 | 0.25 |
| MD, Irganox MD 1024 | % | 0.1 | 0.1 | 0.1 | 0.1 | 0.1 | 0.1 |
| Erucamide, Kemamide E Ultra | % | 0.3 | 0.3 | 0.3 | 0.3 | 0.3 | 0.3 |
| Tinuvin 234 | % | 3 | 3 | 3 | 3 | 3 | 4 |
| Chiguard 622LD | % | | | 1 | | 1 | |
| TiO2, bright white | % | 6.2 | 6.2 | 6.2 | 6.2 | 6.2 | 6.2 |
| Pigment Blue 29 | % | 0.097 | 0.097 | 0.097 | 0.097 | 0.097 | 0.097 |
| Pigment Red 101 | % | 0.051 | 0.051 | 0.051 | 0.051 | 0.051 | 0.051 |
| Delta E after 300hr Weathering | - | | | | 1.8 | 2.0 | 0.4 |
| Smoke Density for Molded Plaque | - | | | | | | |
| Wire Tensile Strength at Break | MPa | 17.4 | 16.7 | 15.9 | 16.3 | 15.9 | 16.3 |
| Wire Tensile Elongation at Break | % | 271 | 258 | 267 | 238 | 246 | 242 |
| Aging Wire TS at Break | MPa | 17 | 15.9 | 15.4 | 16.6 | 14.5 | 16.8 |
| Aging Wire TE at Break | % | 245 | 266 | 258 | 215 | 225 | 241 |

**Table 7**

| Item Description | Unit | CE3 | CE4 | CE5 | EX6 | EX7 | EX8 | EX9 |
|---|---|---|---|---|---|---|---|---|
| PPE, 0.46IV | % | 26 | 26 | 20 | | | | |
| PPE-Siloxane, 0.40 IV | % | | | | 20 | 20 | 20 | 20 |
| SEBS, Kraton G1650 | % | 12 | 12 | 12 | 12 | 12 | 12 | 12 |
| POE, Exact 8210 | % | 19 | 19 | 19 | 19 | 17 | 17 | 17 |
| POE-g-MAH, Fusabond N493 | % | 5 | 5 | 5 | 5 | 5 | 5 | 5 |
| LLDPE, SK JL210 | % | 3 | 3 | 3 | 3 | 5 | 5 | 5 |
| PIB, Indopol H50 | % | 5 | 5 | 5 | 5 | 5 | 5 | 5 |
| MDH, Magnifin H-5IV | % | 30 | 30 | 36 | 36 | 36 | 36 | 36 |
| AO, Irganox 1076 | % | 0.75 | 0.75 | 0.75 | 0.75 | 0.75 | 0.75 | 0.75 |
| AO, Hostanox P-EPQ | % | 0.25 | 0.25 | 0.25 | 0.25 | 0.25 | 0.25 | 0.25 |
| MD, Irganox MD 1024 | % | 0.1 | 0.1 | 0.1 | 0.1 | 0.1 | 0.1 | 0.1 |
| Erucamide, Kemamide E Ultra | % | 0.3 | 0.3 | 0.3 | 0.3 | 0.3 | 0.3 | 0.3 |
| Tinuvin 234 | % | | | | | | 3 | 3 |
| Chiguard 1064 | % | | | 3 | 3 | 3 | | |
| TiO2, bright white | % | | | 6.2 | 6.2 | 6.2 | 6.2 | |
| TiO2, workhorse | % | 3 | | | | | | 3 |
| Pigment Blue 29 | % | 0.004 | | 0.097 | 0.097 | 0.097 | 0.097 | 0.004 |
| Pigment Red 101 | % | | | 0.051 | 0.051 | 0.051 | 0.051 | |
| Pigment Red 178 | % | 0.0003 | | | | | | 0.0003 |
| Pigment Brown 24 | | 0.012 | | | | | | 0.012 |
| Carbon Black | % | 0.0005 | 0.5 | | | | | 0.0005 |
| Delta E after 300hr Weathering | - | | | 5.1 | 4.9 | 1.4 | 6.4 | 1.2 |
| Smoke Density for Molded Plaque | - | | 84 | 87 | 114 | | | |
| Cable Tensile Strength at Break | MPa | 15.6 | 15.7 | 14.8 | 14.4 | 14.5 | 13.3 | 14.9 |
| Cable Tensile Elongation at Break | % | 200 | 238 | 238 | 232 | 209 | 203 | 224 |
| Aging Cable TS at Break | MPa | 16.4 | 16.0 | 16.2 | 15.5 | 14.2 | 13.2 | 14.3 |
| Aging Cable TE at Break | % | 194 | 239 | 201 | 204 | 189 | 186 | 199 |
| Vertical Flame Test | - | Pass | Pass | Fail | Pass | Pass | Pass | Pass |
| Light Transmittance for Cable | % | 65 | 64 | 65 | 74 | | | |

In Table 7, the Vertical Flame Test and Light Transmittance relate to cable performance, which is an AC cord with insulation. The cable was prepared on a Wai Tak Lung Machinery Co. extruder (WTL EXL50) with melt temperature at 240 °C without pre-heating of the copper conductor. The line speed was set at 70 m/min. The wire configuration was AWG24 copper conductor with a coating thickness of 0.74 mm.

Example 6 had better Delta E and light transmittance scores than the corresponding Comparative Example 5. Example 6 passed the Vertical Flame Test, whereas Comparative Example 5 did not.

The foregoing invention has been described in some detail by way of illustration and example for purposes of clarity and understanding. The invention has been described with reference to various specific embodiments and techniques.

## Claims

1. A polymer composition, comprising:
(a) 10 to 40 weight percent of a poly(phenylene ether)-polysiloxane copolymer, wherein the poly(phenylene ether)-polysiloxane copolymer is a mixture of a poly(phenylene ether) homopolymer and a poly(phenylene ether)-polysiloxane block copolymer;
(b) 5 to 25 weight percent of a hydrogenated block copolymer of an alkenyl aromatic compound and a conjugated diene;
(c) 0 to 10 weight percent of a polybutene;
(d) 30 to 60 weight percent a high purity magnesium hydroxide that has been surface treated with an amino polysiloxane;
(e) 0 to 10 weight percent of an anti-UV agent;
(f) 1 to 40 weight percent of a copolymer of ethylene and a C₃-C₁₂ alpha-olefin; and
(g) 0 to 30 weight percent of a polyolefin homopolymer.

2. The composition of claim 1, wherein the anti-UV agent is selected from the group consisting of a benzotriazole-type UV absorber, a triazine-type UV absorber, and a hindered amine light stabilizer, or combinations thereof.

3. The composition of claim 1 or 2, comprising
(a) 15 to 25 weight percent of a poly(phenylene ether)-polysiloxane copolymer;
(b) 10 to 25 weight percent of a hydrogenated block copolymer of an alkenyl aromatic compound and a conjugated diene;
(c) 3 to 8 weight percent of a polybutene;
(d) 30 to 45 weight percent of a high purity magnesium hydroxide that has been surface -treated with an aminopolysiloxane
(e) 2 to 5 weight percent of an anti-UV agent;
(f) 1 to 10 weight percent of a copolymer of ethylene and a C₃-C₁₂ alpha-olefin; and
(g) 1 to 30 weight percent of a polyolefin homopolymer.

4. The composition of claim 3, comprising 2 to 5 weight percent of an anti-UV agent selected from the group consisting of 2-(2H-benzotriazol-2-yl)-4,6-bis(1-methyl-1-phenylethyl)phenol, poly(4-hydroxy-2,2,6,6-tetramethyl-1-piperidine ethanol-alt-1,4-butanedioic acid),2-[4,6-bis(2,4-dimethylphenyl)-1,3,5-triazin-2-yl]-5-(octyloxy)phenol, or mixtures thereof.

5. The composition of claim 4, comprising 2 to 6 weight percent of the polyolefin homopolymer.

6. The composition of claim 5, further comprising 4 to 8 weight percent of a colorant.

7. The composition of claim 6, wherein the colorant comprises TiO₂.

8. An extrusion coated article comprising the composition of any one of claims 1-7.

9. The extrusion coated article of claim 8, wherein the article is an electrical wire jacketed with the composition of claim 1.

10. A process for jacketing an electrical cable or plug, comprising extrusion coating an electrical cable or plug with the composition of any one of claims 1-7.

11. An injection molded article comprising the composition of any one of claims 1-7.

## Patentansprüche

1. Polymerzusammensetzung, umfassend:
(a) 10 bis 40 Gewichtsprozent eines Poly(phenylenether)-Polysiloxan-Copolymers, wobei das Poly(phenylenether)-Polysiloxan-Copolymer ein Gemisch eines Poly(phenylenether)-Homopolymers und eines Poly(phenylenether)-Polysiloxan-Block-Copolymers ist;
(b) 5 bis 25 Gewichtsprozent eines hydrierten Block-Copolymers einer alkenylaromatischen Verbindung und eines konjugierten Diens;
(c) 0 bis 10 Gewichtsprozent eines Polybutens;
(d) 30 bis 60 Gewichtsprozent eines hochreinen Magnesiumhydroxids, welches mit einem Aminopolysiloxan oberflächenbehandelt worden ist;
(e) 0 bis 10 Gewichtsprozent eines Anti-UV-Mittels;
(f) 1 bis 40 Gewichtsprozent eines Copolymers von Ethylen und einem C₃-C₁₂-alpha-Olefin; und
(g) 0 bis 30 Gewichtsprozent eines Polyolefin-Homopolymers.

2. Zusammensetzung nach Anspruch 1, wobei das Anti-UV-Mittel aus der Gruppe bestehend aus einem UV-Absorber vom Benzotriazol-Typ, einem UV-Absorber vom Triazin-Typ, und einem gehinderten Amin-Lichtstabilisator, oder Kombinationen davon ausgewählt ist.

3. Zusammensetzung nach Anspruch 1 oder 2, umfassend
(a) 15 bis 25 Gewichtsprozent eines Poly(phenylenether)-Polysiloxan-Copolymers;
(b) 10 bis 25 Gewichtsprozent eines hydrierten Block-Copolymers einer alkenylaromatischen Verbindung und eines konjugierten Diens;
(c) 3 bis 8 Gewichtsprozent eines Polybutens;
(d) 30 bis 45 Gewichtsprozent eines hochreinen Magnesiumhydroxids, welches mit einem Aminopolysiloxan oberflächenbehandelt worden ist;
(e) 2 bis 5 Gewichtsprozent eines Anti-UV-Mittels;
(f) 1 bis 10 Gewichtsprozent eines Copolymers von Ethylen und einem C₃-C₁₂-alpha-Olefin; und
(g) 1 bis 30 Gewichtsprozent eines Polyolefin-Homopolymers.

4. Zusammensetzung nach Anspruch 3, umfassend 2 bis 5 Gewichtsprozent eines Anti-UV-Mittels ausgewählt aus der Gruppe bestehend aus 2-(2H-Benzotriazol-2-yl)-4,6-bis(1-methyl-1-phenylethyl)phenol, Poly(4-hydroxy-2,2,6,6-tetramethyl-1-piperidin-ethanol-alt-1,4-butandisäure), 2-[4,6-Bis(2,4-dimethylphenyl)-1,3,5-triazin-2-yl]-5-(octyloxy)phenol, oder Gemischen davon.

5. Zusammensetzung nach Anspruch 4, umfassend 2 bis 6 Gewichtsprozent des Polyolefin-Homopolymers.

6. Zusammensetzung nach Anspruch 5, weiterhin umfassend 4 bis 8 Gewichtsprozent eines Färbemittels.

7. Zusammensetzung nach Anspruch 6, wobei das Färbemittel TiO₂ umfasst.

8. Extrusionsbeschichteter Gegenstand, umfassend die Zusammensetzung nach irgendeinem der Ansprüche 1-7.

9. Extrusionsbeschichteter Gegenstand nach Anspruch 8, wobei der Gegenstand ein elektrischer Draht ist, der mit der Zusammensetzung nach Anspruch 1 ummantelt ist.

10. Verfahren zum Ummanteln eines elektrischen Kabels oder Steckers, umfassend Extrusionsbeschichten eines elektrischen Kabels oder Steckers mit der Zusammensetzung nach irgendeinem der Ansprüche 1-7.

11. Spritzgegossener Gegenstand, umfassend die Zusammensetzung nach irgendeinem der Ansprüche 1-7.

## Revendications

1. Composition de polymères, comprenant :
(a) 10 à 40 pourcents en poids d'un copolymère poly(phénylène éther)-polysiloxane, le copolymère poly(phénylène éther)-polysiloxane étant un mélange d'un homopolymère de poly(phénylène éther) et d'un copolymère à blocs poly(phénylène éther)-polysiloxane ;
(b) 5 à 25 pourcents en poids d'un copolymère à blocs hydrogénés d'un composé alcénylaromatique et d'un diène conjugué ;
(c) 0 à 10 pourcents en poids d'un polybutène ;
(d) 30 à 60 pourcents en poids d'un hydroxyde de magnésium de haute pureté qui a subi un traitement superficiel avec un aminopolysiloxane ;
(e) 0 à 10 pourcents en poids d'un agent anti-UV ;
(f) 1 à 40 pourcents en poids d'un copolymère d'éthylène et d'une alpha-oléfine en C₃-C₁₂ ; et
(g) 0 à 30 pourcents en poids d'un homopolymère de polyoléfine.

2. Composition selon la revendication 1, dans laquelle l'agent anti-UV est choisi dans le groupe consistant en un absorbant UV de type benzotriazole, un absorbant UV de type triazine et un photostabilisant de type amine à empêchement stérique, ou les combinaisons de ceux-ci.

3. Composition selon la revendication 1 ou 2, comprenant :
(a) 15 à 25 pourcents en poids d'un copolymère poly(phénylène éther)-polysiloxane ;
(b) 10 à 25 pourcents en poids d'un copolymère à blocs hydrogénés d'un composé alcénylaromatique et d'un diène conjugué ;
(c) 3 à 8 pourcents en poids d'un polybutène ;
(d) 30 à 45 pourcents en poids d'un hydroxyde de magnésium de haute pureté qui a subi un traitement superficiel avec un aminopolysiloxane ;
(e) 2 à 5 pourcents en poids d'un agent anti-UV ;
(f) 1 à 10 pourcents en poids d'un copolymère d'éthylène et d'une alpha-oléfine en C₃-C₁₂ ; et
(g) 1 à 30 pourcents en poids d'un homopolymère de polyoléfine.

4. Composition selon la revendication 3, comprenant 2 à 5 pourcents en poids d'un agent anti-UV choisi dans le groupe consistant en le 2-(2H-benzotriazol-2-yl)-4,6-bis(1-méthyl-1-phényléthyl)phénol, le poly(4-hydroxy-2,2,6,6-tétraméthyl-1-pipéridine éthanol-alt-acide 1,4-butanedioïque, le 2-[4,6-bis(2,4-diméthylphényl)-1,3,5-triazin-2-yl]-5-(octyloxy)phénol, ou les mélanges de ceux-ci.

5. Composition selon la revendication 4, comprenant 2 à 6 pourcents en poids de l'homopolymère de polyoléfine.

6. Composition selon la revendication 5, comprenant en outre 4 à 8 pourcents en poids d'une substance colorante.

7. Composition selon la revendication 6, dans laquelle la substance colorante comprend du TiO₂.

8. Article revêtu par extrusion, comprenant la composition selon l'une des revendications 1 à 7.

9. Article revêtu par extrusion selon la revendication 8, l'article étant un fil électrique gainé de la composition selon la revendication 1.

10. Procédé de gainage d'un câble ou d'une fiche électrique, comprenant le revêtement par extrusion d'un câble ou d'une fiche électrique avec la composition selon l'une des revendications 1 à 7.

11. Article moulé par injection comprenant la composition selon l'une des revendications 1 à 7.
